# EUROPÄISCHE PATENTSCHRIFT

(11) **EP 4 551 532 B1**
(45) Veröffentlichungstag und Bekanntmachung des Hinweises auf die Patenterteilung: **25.03.2026**
(21) Anmeldenummer: 23741308.3
(22) Anmeldetag: 07.07.2023
(51) Int. Cl.: C03B 5/03, C03B 5/42

(54) **GLASSCHMELZWANNE**
GLASS MELTING TANK
CUVE DE FUSION DE VERRE

(30) Priorität: 07.07.2022 DE 102022116919
(43) Veröffentlichungstag der Anmeldung: 14.05.2025
(73) Patentinhaber: Beteiligungen Sorg GmbH & Co. KG, 97816 Lohr am Main (DE)
(72) Erfinder: SCHNURPFEIL, Dirk, 97816 Lohr am Main (DE); ROSENTHAL, Jens, 48249 Dülmen (DE); TORRES PEREZ, Jose Oskar, 97816 Lohr am Main (DE); OPITZ, Michael, 97816 Lohr am Main (DE)
(74) Vertreter: WSL Patentanwälte Partnerschaft mbB
(86) Internationale Anmeldenummer: PCT/EP2023/068878
(87) Internationale Veröffentlichungsnummer: WO 2024/008935

(56) Entgegenhaltungen:
- EP-A1- 0 019 645
- EP-A1- 0 118 580
- CN-U- 203 728 700
- DE-C- 822 289

## Beschreibung

Die vorliegende Erfindung betrifft eine Glasschmelzwanne für eine im Produktionsbetriebszustand vollelektrische Beheizung der Glasschmelze, eine Glasschmelzanlage sowie ein Verfahren zur Herstellung einer Glasschmelzwanne.

Wannen für die Herstellung einer Glasschmelze (Glasschmelzwannen) weisen in der Regel einen Boden und eine einen Wanneninnenraum umgebende seitliche Wandung auf. Die Glasschmelze ist im Produktionsbetriebszustand im Wanneninnenraum angeordnet und in diesem von dem Boden unten und von der Wandung seitlich begrenzt. Der Wanneninnenraum wird zudem zumindest teilweise von einer Überdachung nach oben abgedeckt, um den Verlust von Wärmeenergie und/oder die Freisetzung von Abgasen und Staub zu reduzieren. In dem Wanneninnenraum fließt die Glasschmelze während eines Schmelz- und Läuterprozesses in einer Fließrichtung von einem Einschmelzbereich, in dem Rohstoffgemenge und gegebenenfalls Scherben in den Wanneninnenraum eingegeben werden, zu mindestens einer Ausgangsöffnung, durch die das geschmolzene Glas abgezogen wird. Das abgezogene geschmolzene Glas kann beispielsweise zur Herstellung von Behälterglas, Flachglas, Walzglas, Fiberglas, Glasfasern, Haushaltsglas oder technischen Gläsern verwendet werden.

Aus den Druckschriften EP 0 019 645 A1, CN 110425881 A, EP 0 118 580 A1 und DE 692 11 446 T2 sind Glasschmelzöfen für die Verglasung von Flugasche oder Industrieabfall als Vorprodukt für Zementklinker bekannt. Dieses Material zeichnet sich durch eine steilere Viskositätskurve als Glas aus. In diesen Druckschriften werden spezifisch für dieses Material einsetzbare Glasschmelzöfen beschrieben, bei denen das geschmolzene Material in einem zentralen Bereich des jeweiligen Ofens mittels eines entsprechenden, im zentralen Bereich angeordneten Überlaufs/Siphons abgezogen wird. Das Dokument DE 822 289 C beschreibt einen elektrischen Ofen zum Schmelzen von Glas, beim dem eine elektrodenbeheizte Schmelzzone mit einer induktiv beheizten Läuterungszone kombiniert wird. Beide Zonen können übereinander in Schachtform angeordnet sein, wobei bei dieser vertikalen Anordnung die Schmelzzone den Oberteil des Ofenschachtes bildet und von der Läuterzone durch eine Zwischendecke abgetrennt ist, die in der Mitte mit einer konzentrischen Durchflussöffnung versehen ist. Durch Schlitze in der Nähe von Elektroden an der Innenwand der Schmelzzone oder direkt durch diese inneren Elektroden hindurch fließt das geschmolzene Glas in den Innenraum und von da aus in den darunter befindlichen Läuterungsraum.

Sogenannte Cold-Top-Wannen weisen typischerweise eine oben auf der Glasschmelze angeordnete, vollständige Bedeckung mit noch nicht aufgeschmolzenen Ausgangsstoffen (Rohstoffgemenge und/oder Scherben) auf, deren Temperatur deutlich unter der Temperatur der Glasschmelze liegt und deshalb als "cold" bezeichnet wird. Die "kalte" Bedeckung hat den bekannten Vorteil, dass sie wärmeisolierend ist und als ressourcenschonende Kondensatfalle dient. Bei der Cold-Top-Technologie fließt das Glas in der Summe in vertikaler Richtung, d.h. von oben nach unten, und wird im Bereich des Bodens oder seitlich von diesem abgezogen.

Vollelektrisch beheizte Glasschmelzwannen mit geschlossenem Oberofen sind bekannt und werden heute insbesondere für einen kleineren Glas-Durchsatz (Förderleistung/Schmelzleistung/Tonnage) für Glas mit guter Qualität im Bereich von maximal 250 t Glasschmelze/Tag verwendet. Aus dem Dokument US 3,520,979 ist eine Glasschmelzwanne mit einer elektrischen Beheizung bekannt, bei der der Wanneninnenraum die Form eines vollständigen 6-seitigen Prismas aufweist, wobei die Elektroden von der seitlichen Wandung in die Glasschmelze hineinragen. Die gleiche Form des Wanneninnenraums weist auch die in dem Dokument DE 34 05 273 C2 gezeigte Glasschmelzwanne auf, wobei die Elektroden bei dieser Variante als Topelektroden ausgeführt sind. Ein elektrisch beheizter, quaderförmiger Wanneninnenraum mit einer horizontalen Fließrichtung der Glasschmelze wird in dem Dokument US 3,885,945 offenbart. Glasschmelzwannen mit vollelektrischer Beheizung arbeiten heute vorranging nach dem Cold-Top-Prinzip, also mit einer auf dem Glasbad angeordneten "kalten" Rohstoffgemenge- und/oder Scherben-Decke.

Die Bedeutung des Klimaschutzes und der damit verbundene gesellschaftliche Druck auf energieintensivere Prozesse, die in der Glasindustrie verwendet werden, wächst zunehmend. Die derzeit verfügbaren Prozesse zur Gewinnung erneuerbarer Energie produzieren überwiegend elektrische Energie, deren direkte Verwendung energetisch am sinnvollsten ist. Mit einer direkten Nutzung der elektrischen Energie für das Erschmelzen von Glas, z.B. in Form der Beheizung mittels Elektroden basierend auf dem Joule-Effekt, kann eine hohe Effizienz erreicht werden. Demgegenüber wäre eine Umwandlung der regenerativ erzeugten elektrischen Energie in einen anderen Energieträger (z.B. Wasserstoff) und eine Beheizung durch z.B. Verbrennen dieses Energieträgers in der Gesamtbetrachtung deutlich verlustreicher. Daher existiert ein großes Interesse an einer verstärkten Nutzung der direkten elektrischen Beheizung einer Glasschmelzwanne, insbesondere für Glasschmelzwannen, die höhere Förderleistungen erreichen sollen.

Weitere Faktoren, welche die Weiterentwicklung der Glasschmelzwannen-Technologie beeinflussen, sind die gewünschte Glasqualität und die Größe der Glasschmelzwanne bzw. der für sie zur Verfügung stehende Platz in der Produktionslinie. In vielen Fällen soll die Glasqualität hoch sein, d.h. die Blasendichte im Endprodukt soll weniger als 60 kleine Blasen pro 100 g Glas betragen. Andererseits ist häufig der für eine Glasschmelzwanne zur Verfügung stehende Platz begrenzt. Große Aggregate werden zudem für viele Anwendungsfälle hinsichtlich der Errichtung und den laufenden Betrieb als zu aufwändig beurteilt.

Die Aufgabe der vorliegenden Erfindung ist es somit, eine kompakte Glasschmelzwanne zu schaffen, welche im Produktionsbetriebszustand vollständig elektrisch beheizbar ist, eine gute Glasqualität liefert und für höhere Glas-Durchsatzmengen geeignet ist. Ferner besteht die Aufgabe darin, ein kostengünstiges und einfaches Verfahren für die Herstellung einer derartigen Glasschmelzwanne anzugeben.

Die obige Aufgabe wird gelöst von einer Glasschmelzwanne mit den Merkmalen des Anspruchs 1 und ein Verfahren zu dessen Herstellung mit den Merkmalen des Anspruchs 16. Die obige Aufgabe wird ferner durch ein System aus zwei Glasschmelzwannen, das die Merkmale des Anspruchs 14 aufweist, und eine Glasschmelzanlage gelöst, welche die Merkmale des Anspruchs 15 hat.

Insbesondere wird die obige Aufgabe durch eine Glasschmelzwanne für eine im Produktionsbetriebszustand vollelektrische Beheizung der Glasschmelze gelöst, welche eine seitliche Wandung aus feuerfestem Material aufweist, die einen Wanneninnenraum seitlich umschließt, wobei in dem Wanneninnenraum im Produktionsbetriebszustand die Glasschmelze angeordnet ist, deren Oberfläche horizontal verläuft, wobei die seitliche Wandung einen Innenwandungsabschnitt und einen, dem Innenwandungsabschnitt gegenüber liegenden Außenwandungsabschnitt aufweist, wobei eine dem Wanneninnenraum zugewandte Heißraumseite des Innenwandungsabschnitts und eine dem Wanneninnenraum zugewandte Heißraumseite des Außenwandungsabschnitts jeweils im Wesentlichen die Form von inneren und äußeren Mantelflächen eines Hohlkörpers mit einem durchgehenden Hohlraum oder eines entsprechenden Hohlkörpersegments aufweisen, wobei der Hohlkörper beispielsweise ein Hohlzylinder oder ein Hohlprisma ist, wobei der Innenwandungsabschnitt in Bezug auf seinen Umfang zumindest teilweise einen dem Hohlraum entsprechenden durchgehenden, sich in vertikaler Richtung erstreckenden Freiraum derart umgibt und nach Innen abschließt, dass in den Freiraum keine Glasschmelze gelangt.

Die erfindungsgemäße Glasschmelzwanne weist einen Wanneninnenraum auf, der unten durch einen Boden und seitlich durch die Wandung jeweils aus feuerfestem Material begrenzt wird. Die seitliche Wandung umfasst alle Seitenwände einschließlich gegebenenfalls vorhandener zweier Zwischenwände (jeweils eine Zwischenwand kann zwischen dem Innenwandungsabschnitt und dem Außenwandungsabschnitt angeordnet sein) der Glasschmelzwanne, sofern solche Zwischenwände vorhanden sind. Im Produktionsbetriebszustand ist die Glasschmelze im Wanneninnenraum angeordnet. Erfindungsgemäß haben eine der Glasschmelze zugewandte Heißraumseite des Innenwandungsabschnitts und eine der Glasschmelze zugewandte Heißraumseite des Außenwandungsabschnitts im Wesentlichen die Form von inneren und äußeren Mantelflächen eines (vollständig umlaufenden) Hohlkörpers mit einem sich in vertikaler Richtung erstreckenden, durchgehenden Hohlraum oder eines (nicht vollständig umlaufenden) entsprechenden Hohlkörpersegments. "Im Wesentlichen" bedeutet hierbei, dass die beiden Heißraumseiten Ausnehmungen (z.B. für eine Seiten- oder Top- elektrode) und Stufen aufweisen können, die bei dieser Betrachtung der generellen Form dieser Flächen nicht berücksichtigt werden. Wichtig ist, dass in der Glasschmelzwanne ein sich in vertikaler Richtung erstreckender, durchgehender Freiraum vorhanden ist, welcher durch den Innenwandungsabschnitt gebildet und von dem Innenwandungsabschnitt entweder vollständig oder teilweise umschlossen ist. Der Terminus "durchgehender Freiraum" bedeutet hierbei, dass der Innenwandungsabschnitt derart mit dem Boden der Glasschmelzwanne verbunden ist, dass der Innenwandungsabschnitt die Glasschmelze über ihre gesamte Glasstandstiefe im Wanneninnenraum in Richtung des Freiraums begrenzt, so dass der Freiraum durch die gesamte Glasschmelze hindurch- und über sie hinausgeht. Der Innenwandungsabschnitt erstreckt sich damit bis oberhalb eines Niveaus der kalten Gemengedecke und folglich auch der Glasschmelze. Der Freiraum bildet somit keinen Auslass. Dies ergibt sich auch aus der obigen Beschreibung, welche erläutert, dass der Innenwandungsabschnitt den Wanneninnenraum seitlich umschließt. Während des Betriebs der Glasschmelzwanne (d.h. im Produktionsbetriebszustand) kann demnach in den Freiraum keine Glasschmelze gelangen. Die Ausführungsform, bei der der Freiraum durch den Innenwandungsabschnitt nicht vollständig sondern teilweise umschlossen ist, bezieht sich auf den Umfang des Freiraums, wenn dieser in einem im Wesentlichen horizontalen Querschnitt, d.h. senkrecht zu einer im Wesentlichen in vertikaler Richtung verlaufenden Längsachse des Freiraums betrachtet wird (d.h. er bildet, wie unten beschrieben ist, ein Hohlkörpersegment). Das "teilweise Umschließen" bezieht sich insbesondere nicht auf die Höhe des Freiraums sondern auf seinen Umfang. Der Freiraum kann demnach in Bezug auf seinen Umfang vollständig oder teilweise von dem Innenwandungsabschnitt umschlossen sein. Bei dem als Vergleich zur Definition der Form der Heißraumseiten des Innen- und des Außenwandungsabschnitts verwendeten Hohlkörper-Modell umschließt die innere Mantelfläche den Hohlraum des Hohlkörpers, während die äußere Mantelfläche den Hohlkörper auf der Außenseite seitlich umgibt. Grund- und Deckfläche des Hohlkörpers gehören nicht zu den Mantelflächen. Der Freiraum entspricht dem Hohlraum des Vergleichs-Hohlkörpers, wobei er um die Dicke des Innenwandungsabschnitts kleiner ist. Dies bedeutet, dass der Wanneninnenraum bzw. die darin im Produktionsbetriebszustand angeordnete Glasschmelze insgesamt im Wesentlichen die Form des jeweiligen Hohlkörpers oder Hohlkörpersegments einnimmt, wobei die konkrete Gestaltung des Bodens und der Abdeckung des Wanneninnenraums bei dieser Betrachtung nicht berücksichtigt wird. Der Wanneninnenraum umschließt den Freiraum entweder vollständig (wenn er als Hohlkörper ausgebildet ist) oder teilweise (wenn er als Hohlkörpersegment ausgebildet ist). Bezogen auf den gesamten Hohlkörper befindet sich der Freiraum, in horizontaler Richtung gesehen, vorzugsweise in einem Zentralbereich der Glasschmelzwanne. Der Hohlkörper kann beispielsweise als Hohlzylinder oder Hohlprisma gestaltet sein, wobei das Hohlprisma analog zum Hohlzylinder eine Ausnehmung als Hohlraum aufweist, die sich vorzugsweise mittig und/oder parallel zur Rotations-Symmetrieachse des Prismas erstreckt. Das Hohlprisma kann ein dreiseitiges, vierseitiges, fünfseitiges oder ein Hohlprisma mit mehr als fünf Außenseiten sein. Die Achse des Hohlprismas bzw. des Hohlzylinders kann sich dabei in vertikaler Richtung der Glasschmelzwanne erstrecken. Der Innenwandungsabschnitt umgibt den Freiraum, der in vorteilhafter Weise für technische Einrichtungen, die an oder in der Glasschmelzwanne verwendet werden sollen, sowie für entsprechendes Bedienpersonal zugänglich ist. Der Innenwandungsabschnitt bildet an seiner Heißraumseite eine konvexe Fläche, während der Außenwandungsabschnitt an seiner Heißraumseite eine konkave Fläche ausbildet. Die beiden Heißraumseiten können dabei entweder eine gebogene Form aufweisen (d.h. die Form einer (Teil-)Zylinderoberfläche) oder abschnittsweise gerade verlaufen, d.h. die Form einer (Teil- )Prismaoberfläche ausbilden. Eine im Wesentlichen in vertikaler Richtung verlaufende Längsachse der Glasschmelzwanne kann parallel zu der Längsachse des Freiraums verlaufen, wobei diese beiden Achsen auch übereinander liegen können.

Im horizontalen Querschnitt betrachtet bildet der Wanneninnenraum die Form eines Rings oder Ringabschnitts, dessen innere und äußere Ränder gebogen (d.h. als Kreis- oder Ellipsenlinie) oder eckig verlaufen können. Die Breite des Wanneninnenraums in horizontaler Richtung zwischen der Heißraumseite des Innenwandungsabschnitts und der Heißraumseite des Außenwandungsabschnitts wird im Folgenden auch als Ringbreite RB bezeichnet. Die Heißraumseite des Innenwandungsabschnitts kann konzentrisch zu der Heißraumseite des Außenwandungsabschnitts angeordnet sein oder nicht konzentrisch zu dieser verlaufen.

In vertikaler Richtung besitzt der Wanneninnenraum eine vorgegebene Höhe, wobei die Höhe vom Boden bis zur Oberkante der seitlichen Wandung gemessen wird. Die Höhe der Glasschmelze im Produktionsbetriebszustand in dem Wanneninnenraum wird auch als Glasstandstiefe bezeichnet. Hierbei beinhaltet die Glasstandstiefe lediglich die Höhe der Schmelze, nicht jedoch die über der Schmelze angeordnete Decke aus kaltem Rohstoffgemenge und/oder Scherben. Die Glasstandstiefe ist ein dem Wanneninnenraum der Glasschmelzwanne zugeordneter Wert und entspricht in der Regel nicht der Badtiefe im Feeder.

Der Boden der Glasschmelzwanne bzw. des Wanneninnenraums kann ringscheibenförmig, d.h. mit durchgehender Öffnung im Bereich des Freiraums, oder scheibenförmig (ohne durchgehende Öffnung) ausgebildet sein. Im Falle eines scheibenförmigen Bodens ist der Freiraum nur von oben zugänglich.

In der Ausführungsform, bei der der Wanneninnenraum die Form eines Hohlkörpersegments aufweist (und entsprechend die Heißraumseite des Innenwandungsabschnitts und die Heißraumseite des Außenwandungsabschnitts), überstreicht der Wanneninnenraum entlang des horizontalen Querschnitts betrachtet nicht 360 ° sondern einen kleineren Winkel, in einem Ausführungsbeispiel jedoch mindestens einen Winkel von 120 °. Der Wanneninnenraum bildet somit im horizontalen Querschnitt keinen vollständig umlaufenden Ring sondern lediglich ein teilumlaufendes Ringsegment. Bei diesem Ausführungsbeispiel umschließt der Innenwandungsabschnitt der seitlichen Wandung den Freiraum nicht vollständig sondern nur teilweise. Diese Ausführungsform beinhaltet ein Wanneninnenraum-Volumen, das kleiner ist als bei einer Glasschmelzwanne, bei der der Wanneninnenraum die Form eines vollständig umlaufenden Hohlkörpers besitzt, weist aber sonst die gleichen, oben und unten erläuterten Eigenschaften auf.

Die Kaltraumseiten der seitlichen Wandung (d.h. des Innenwandungsabschnitts und des Außenwandungsabschnitts und gegebenenfalls der Zwischenwand) der Glasschmelzwanne, die jeweils dem Wanneninnenraum abgewandt sind, können im Wesentlichen parallel zu der jeweiligen Heißraumseite verlaufen. Die Kaltraumseiten können zumindest teilweise oder vollständig mit Isolation versehen sein.

Der im Wesentlichen in vertikaler Richtung verlaufende Freiraum kann die Form eines Zylinders oder Prismas aufweisen, wobei die Längsachse des Freiraums parallel zur Längsachse des Wanneninnenraums oder zu diesem unter einem kleinen Winkel, der höchstens 30 ° beträgt, geneigt verläuft. Vorzugsweise sind die beiden Längsachsen identisch. Der Hohlkörper ist vorzugsweise ein rotationssymmetrischer Hohlkörper, wobei unter Rotationssymmetrie verstanden wird, dass der Hohlkörper durch Drehung um bestimmte, vorgegebene Winkel um die Längsachse auf sich selbst abgebildet wird. **In** einem Ausführungsbeispiel ist der Hohlkörper ein im Wesentlichen gerader Hohlkörper, da ein gerader Hohlkörper bei der Realisation einer solchen Glasschmelzwanne kostengünstiger ist.

Durch die erfindungsgemäße Ausbildung des Wanneninnenraums in der oben beschriebenen neuen Form eines Hohlkörpers oder Hohlkörpersegments, wobei der Wanneninnenraum den für das Schmelzen des zugegebenen Rohstoffgemenges und/oder der zugeführten Scherben und das Läutern der Glasschmelze bestimmte Raum darstellt, kann eine Skalierung der Glasschmelzwanne in Richtung höheren Glas-Durchsatz (bis zu 1.200 t / Tag) erfolgen, wobei die Glasschmelzwanne gleichzeitig eine kompakte Form behält, die von außen oder von innen über den Freiraum gut zugänglich ist. Die angegebene Form wird üblicherweise durch Palisadenteile aus feuerfestem Material, die neben- und/oder übereinander gesetzt und befestigt werden, hergestellt. Das Feuerfest-Material sind beispielsweise anorganische, nichtmetallische Materialien (Keramik, Glas, Glaskeramik, Mineralfasern) und kann z.B. die Oxide Siliciumoxid, Aluminiumoxid, Magnesiumoxid, Calciumoxid, Zirconiumoxide, Chromoxid umfassen. Zudem können Kohlenstoff und Siliciumcarbid als Komponenten verwendet werden. Als ein Werkstoff wird beispielsweise schmelzgegossenes AZS (Aluminate, Zirkonate, Silikate, auch Aluminium-, Zirkon- und Siliziumoxide) verwendet. Ferner kann das Feuerfest-Material auf der Heißraumseite mindestens eine Beschichtung, beispielsweise aus Platin oder einer Platin-Legierung, aufweisen.

**In** einem Ausführungsbeispiel ist die Glasschmelzwanne derart eingerichtet, dass sie nach dem Cold-Top-Prinzip arbeitet. Dies bedeutet, dass die Aufgabe des Rohstoffgemenges und/oder Scherben von oben in Richtung der nach Möglichkeit vollständig bedeckten Oberfläche der Glasschmelze erfolgt. Die Beheizung der Glasschmelze wird mittels Elektroden durchgeführt, die von oben in die Oberfläche der Glasschmelze hineinragen (Top-Elektroden), seitlich von dem Innenwandungsabschnitt und/oder dem Außenwandungsabschnitt der Wandung (Seitenelektroden) und/oder vom Boden in die Glasschmelze hineinragen.

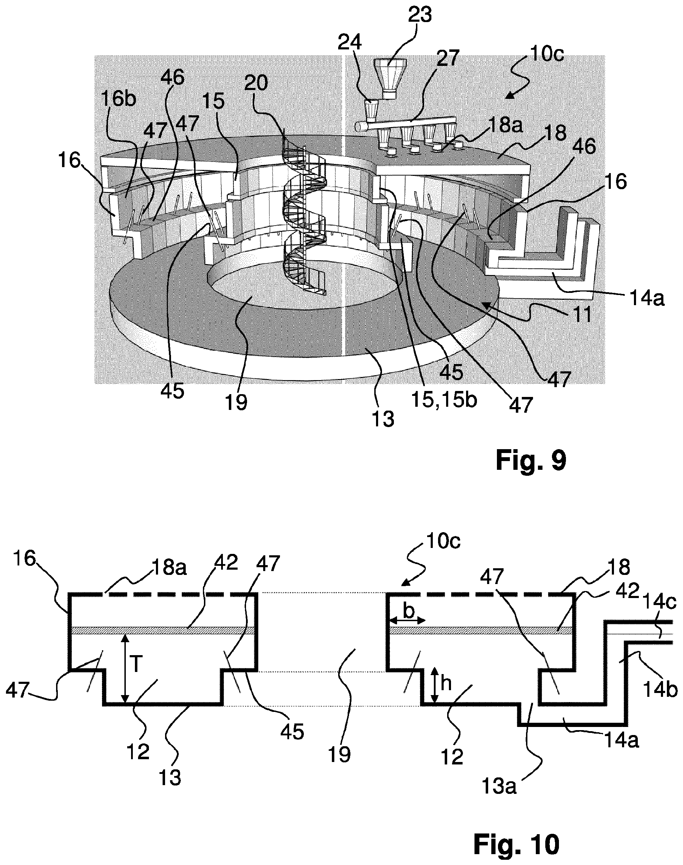

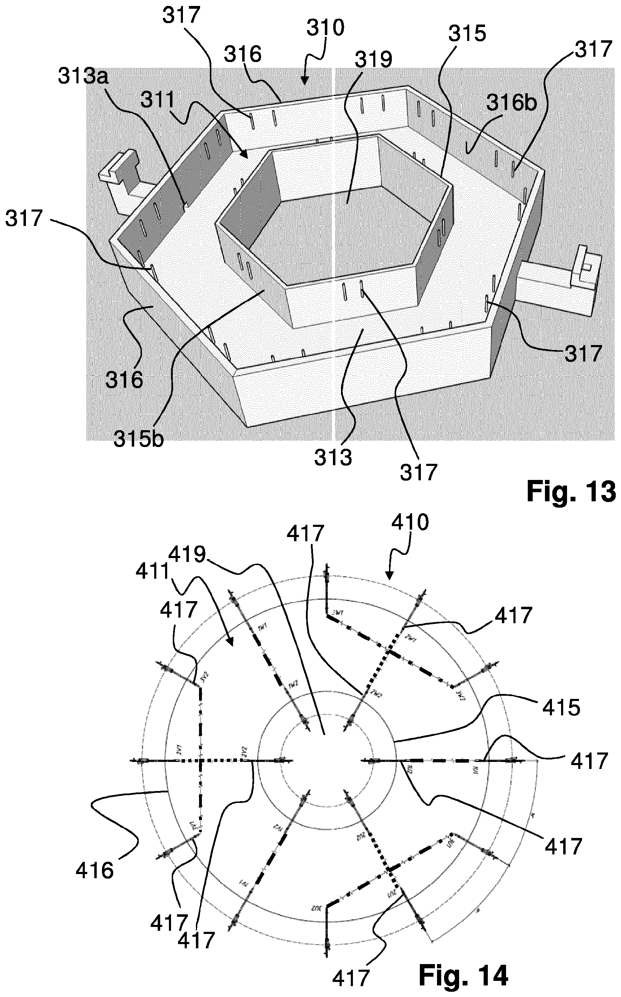

Die Fließrichtung des Glases in der erfindungsgemäßen Glasschmelzwanne ist in Summe von oben nach unten (vertikal), d.h. von der Oberfläche der Glasschmelze in Richtung Boden des Wanneninnenraums, wobei mindestens eine Auslassöffnung, durch die das geschmolzene Glas abgezogen wird, im Bereich des Bodens oder des Außenwandungsabschnitts der seitlichen Wandung nahe des Bodens des Wanneninnenraums angeordnet ist. In einem Ausführungsbeispiel sind zwei oder drei, nebeneinander oder einander gegenüber liegende Auslassöffnungen im Bereich des Bodens (sogenannter versenkter Durchlass, siehe beispielsweise das Ausführungsbeispiel gemäß Fig. 10, 11 und 12) oder im Bereich des Außenwandungsabschnitts der seitlichen Wandung vorgesehen (sogenannter gerader Durchlass, siehe beispielsweise die Ausführungsbeispiele gemäß Fig. 9 und 13). Hierbei ist die mindestens eine Auslassöffnung, wenn diese im Bereich des Bodens des Wanneninnenraums angeordnet, d.h. als versenkter Durchlass gestaltet, ist, nahe des Außenwandungsabschnitts angeordnet. Wenn der runde oder eckige, jedoch im Wesentlichen ringförmige Boden der Glasschmelzwanne in radialer Richtung (bezogen auf eine vertikale Achse, die im Freiraum verläuft) in Bezug auf die Ringbreite RB in zwei (oder drei) Abschnitte geteilt wird, nämlich in einen (oder zwei) dem Freiraum am nächsten liegenden Innenabschnitt(en) (innerer Ringabschnitt) und in einen dem Außenwandungsabschnitt am nächsten liegenden Außenabschnitt (äußerer Ringabschnitt), dann ist die mindestens eine Auslassöffnung insbesondere in dem Außenabschnitt angeordnet, d.h. im äußersten Drittel bis zur äußersten Hälfte des Bodens. In einem Ausführungsbeispiel ist die Auslassöffnung derart gestaltet, dass sie in radialer Richtung im Außenabschnitt des Bodens beginnt und sich bis zum Außenwandungsabschnitt erstreckt. In die Umfangsrichtung (senkrecht zur radialen Richtung) kann die Auslassöffnung beispielsweise eine Breite von mindestens 200 mm, beispielsweise kann die Breite im Bereich zwischen 250 mm und 1.200 mm liegen, und eine Höhe von 200 mm bis 900 mm aufweisen (gemessen vertikal vom Boden der Auslassöffnung bzw. Durchlass nach oben bis zum Boden der Glasschmelzwanne). Die Auslassöffnung in Bereich des Außenwandungsabschnitts kann ebenfalls eine Breite (in Umfangsrichtung) im Bereich zwischen 250 mm und 1.200 mm und eine Höhe von 200 mm bis 900 mm (Abmessung in vertikaler Richtung) aufweisen.

In Fließrichtung der Glasschmelze schließt sich an jede Auslassöffnung in dieser Reihenfolge ein horizontaler Durchlass, ein vertikaler Riser (Aufstiegskanal) und ein horizontaler Konditionierkanal an, mit einem Glaslevel, welcher dem Glaslevel in der Glasschmelzwanne entspricht. In dem Konditionierkanal wird die Temperatur der Glasschmelze langsam von der höheren Temperatur der Glasschmelzwanne auf die für die Verarbeitung der Glasschmelze niedrigere Temperatur (typischerweise im Bereich von 1.050 °C bis 1.350 °C) reduziert, während die Glasschmelze in dem Konditionierkanal in Richtung der jeweiligen Verarbeitungsvorrichtung(en) fließt. Der Konditionierkanal kann, zumindest abschnittsweise eine Breite im Bereich von 250 mm bis 3.000 m aufweisen. Die Glasstandstiefe im Bereich des Konditionierkanals kann beispielsweise im Bereich zwischen 150 mm und 650 mm liegen.

Der Zustand "im Produktionsbetrieb" der Glasschmelzwanne bedeutet, dass das in der Glasschmelzwanne geschmolzene und durch die mindestens eine Auslassöffnung abgezogene Glas für die Herstellung von Flachglas, Hohlglas, Faserglas oder Spezialglas verwendet wird. Hiervon zu unterscheiden ist ein Betrieb, bei dem, z.B. vor oder nach einer Wartungsphase, die Glasproduktion langsam hoch- oder heruntergefahren wird.

In einem Ausführungsbeispiel weist die Glasschmelzwanne eine Vielzahl von Elektroden auf, welche die Glasschmelze im Produktionsbetriebszustand beheizt, wobei eine erste Gruppe der Vielzahl von Elektroden in einem an den Innenwandungsabschnitt angrenzenden Bereich in die Glasschmelze hineinragt und eine zweite Gruppe der Vielzahl von Elektroden in einem an den Außenwandungsabschnitt angrenzenden Bereich in die Glasschmelze hineinragt. Die erste Gruppe und/oder zweite Gruppe von Elektroden kann als Topelektroden ausgeführt sein.

Alternativ oder zusätzlich können die Elektroden als von der Seitenwandung hineinragende Seiten- oder vom Boden hineinragende Bodenelektroden ausgebildet sein. Der Vorteil dieser Ausführungsform besteht darin, dass die Elektroden eine deutlich geringere Entfernung voneinander haben als bei einer herkömmlichen Glasschmelzwanne ohne Freiraum (teilweise lediglich ¼ bis 1/3 der herkömmlichen Entfernung). Durch die Anordnung der Elektroden in der Nähe des den Freiraum umgebenden Innenwandungsabschnitt kann die anliegende Spannung verringert und damit die Sicherheit beim Betrieb der Glasschmelzwanne erhöht werden. Zudem sind durch die neue Form des Wanneninnenraums die auf der Oberfläche der Glasschmelze vorherrschenden Unterschiede der Ströme in Bezug auf das Rohstoffgemenge bzw. die Scherben kleiner als bei einer Wannenform ohne Freiraum, was zur Verbesserung der Glasqualität führt.

**In** einem Ausführungsbeispiel kann jede Elektrode der ersten Gruppe und/oder der zweiten Gruppe derart als Topelektrode ausgebildet sein, dass sie im Produktionsbetriebszustand senkrecht oder unter einem kleinen Winkel zur vertikalen Richtung, z.B. maximal 30 °, vorzugsweise zwischen 5 ° und 20 °, schräg von oben, d.h. von der Oberfläche der Glasschmelze aus, in die Glasschmelze hineinragen und die Glasschmelze von oben beheizen. **In** einem Ausführungsbeispiel kann die Topelektrode zusätzlich in den Wanneninnenraum hinein- und hinausschwenkbar ausgebildet sein. Hierdurch lässt sich jede Elektrode leicht austauschen oder erneuern. Hierbei sind die in/an dem Innenwandungsabschnitt der seitlichen Wandung angeordneten Elektroden über den Freiraum und die in/an dem Außenwandungsabschnitt der seitlichen Wandung vorgesehenen Elektroden von außen zugänglich.

**In** einem Ausführungsbeispiel weist der Innenwandungsabschnitt und/oder der Außenwandungsabschnitt an der jeweiligen Heißraumseite mindestens eine Stufe und/oder mindestens eine Ausnehmung auf. Die mindestens eine Ausnehmung in dem Innenwandungsabschnitt und/oder dem Außenwandungsabschnitt der seitlichen Wandung der Glasschmelzwanne kann beispielsweise für die Anordnung bzw. das Herein- und/oder Herausschwenken der Elektrode vorgesehen und in einem Bereich oberhalb der Glasschmelze angeordnet sein. Eine Stufe kann derart beschaffen sein, dass sie die Ringbreite des Wanneninnenraums im Vergleich zu oberhalb der Stufe verringert oder vergrößert. Die Stufe kann aufgrund der Anordnung von Palisadenelementen des feuerfesten Materials übereinander vorgesehen sein, kann zur Anordnung von Elektroden oder zur Beeinflussung von Strömungen in der Glasschmelze dienen.

**In** einem Ausführungsbeispiel beträgt der Durchmesser des von dem Innenwandungsabschnitt zumindest teilweise umgebenen Freiraums mindestens 3 m, wobei der Durchmesser in Bezug auf die Heißraumseite des Innenwandungsabschnitts gemessen wird. **In** einem weiteren Ausführungsbeispiel ist in dem Freiraum eine Ein- und/oder Ausstiegseinrichtung angeordnet, welche für einen Ein- und/oder Ausstieg für Bedienpersonal nach oben und/oder unten eingerichtet ist. Der Freiraum hat somit eine ausreichende Größe, dass Bedienpersonal in diesem arbeiten kann und dass die oben erwähnte Ein- und/oder Ausstiegseinrichtung (z.B. eine Treppe, Leiter, Hebebühne mit Führung oder dergl.) Platz findet. Die Ein- und/oder Ausstiegseinrichtung ist aus Arbeitsschutzgründen vorgesehen, dass sich das Bedienpersonal bei Problemen schnell in Sicherheit bringen kann.

**In** einem Ausführungsbeispiel ist der Wanneninnenraum nach oben durch eine Drehdecke abgedeckt, welche im Wesentlichen die Form einer Ringscheibe oder eines Ringscheibensegments aufweist und welche vorzugsweise als Hänge-Drehdecke ausgebildet ist. Die Verwendung einer Drehdecke in der oben angegebenen Form ermöglicht eine einfache Abdeckung des Wanneninnenraums nach oben, so dass Wärmeverluste und die Freisetzung von Abgasen und/oder Staub vermieden oder verringert werden können. Gleichzeitig erlaubt die Drehdecke, die über mindestens 90 ° drehbar ausgebildet ist, eine einfache, gleichmäßige und leicht zu steuernde Zuführung von Rohstoffgemenge und/oder Scherben zu der Glasschmelze. Auch bei der Ausführungsform, bei der die Glasschmelzwanne einen Wanneninnenraum-Volumen in Form eines Hohlkörpersegments aufweist (d.h. nicht vollständig umläuft), kann die Drehdecke als vollständige Ringscheibe gestaltet sein, um in jeder Drehposition eine Abdeckung des Wanneninnenraums zu gewährleisten.

Der Außenwandungsabschnitt der seitlichen Wandung der Glasschmelzwanne kann mittels eines an einer Kaltraumseite des Außenwandungsabschnitts angeordnetes Außenstahlgerüsts gehalten sein. **In** einem Ausführungsbeispiel kann zusätzlich der Innenwandungsabschnitt mittels eines an einer Kaltraumseite des Innenwandungsabschnitts angeordnetes Innenstahlgerüsts gehalten sein. Das Innenstahlgerüst und das Außenstahlgerüst stützen hierbei die seitliche Wandung ab. Das Außenstahlgerüst und gegebenenfalls das Innenstahlgerüst kann zudem jeweils an seiner Oberseite ein ringförmiges Schienenelement aufweisen. Das jeweilige Schienenelement dient zum Abstützen und Führen der Drehdecke, wobei die Drehdecke pro Schiene mindestens jeweils zwei, vorzugsweise mindestens drei entsprechende Räder aufweist, die entlang des jeweiligen Schienenelements rollen. Das Ausführungsbeispiel, bei dem auch am Innenstahlgerüst ein Schienenelement und mindestens zwei entsprechende Räder an der Drehdecke vorgesehen sind, hat den Vorteil, dass hierdurch eine zusätzliche Abstützung der Drehdecke im Bereich des Freiraums bewirkt wird, so dass die Stabilität der Drehdecke und die Sicherheit wesentlich erhöht werden.

**In** einem Ausführungsbeispiel erfolgt die Abdichtung der Glasschmelzwanne im Bereich des Außenwandungsabschnitts und beispielsweise auch im Bereich des Innenwandungsabschnitts mittels einer von der Drehdecke in vertikaler Richtung nach unten abragenden Schürze (Kragen), die in eine Führung eingreift, die ein abdichtendes Material, z.B. Sand, enthält. Die Führung kann an der Oberseite des Außenstahlgerüsts und, in einem Ausführungsbeispiel zusätzlich an der Oberseite des Innenstahlgerüsts, jeweils in etwa in horizontaler Richtung neben dem jeweiligen Schienenelement angeordnet sein.

In einem Ausführungsbeispiel sind die Zuführungseinrichtung und die Drehdecke derart ausgebildet, dass die Zuführung von Rohstoffgemenge und/oder Scherben in die Glasschmelzwanne durch mindestens eine entsprechende Öffnung in der Drehdecke erfolgt. Die Zuführung kann auch durch zwei oder mehr, z.B. in radialer Richtung der Drehdecke nebeneinander angeordnete Öffnungen erfolgen, was eine gleichmäßigere Verteilung des Rohstoffgemenges und/oder der Scherben auf der Oberfläche der Glasschmelze bewirkt. In einem weiteren Ausführungsbeispiel können mindestens zwei Gruppen von Öffnungen, die in radialer Richtung nebeneinander liegen, für die Zuführung von Rohstoffgemenge und/oder Scherben vorgesehen sein, was die Verteilung weiter vergleichmäßigt und gegebenenfalls den bei der Drehung der Drehdecke erforderlichen Drehwinkel reduziert. Die Zuführungseinrichtung kann beispielsweise derart ausgebildet sein, dass oberhalb der Glasschmelzwanne mindestens ein ortsfester Vorratsbehälter für Rohstoffgemenge und/oder Scherben vorgesehen ist, aus dem mittels einer Dosiervorrichtung Rohstoffgemenge und/oder Scherben zu entsprechend abgestimmten Zeitpunkten einem mit der Drehdecke beweglichen Vorratsbehälter zugeführt wird. Beispielsweise kann das Rohstoffgemenge und/oder Scherben in ausreichender Menge zugeführt werden, wenn sich entlang der Drehbewegung der Drehdecke der bewegliche Vorratsbehälter unter dem ortsfesten Vorratsbehälter befindet. Alternativ kann ein flexibles Zuführrohr vorgesehen sein, welches während der Drehung der Drehdecke den Ausgang der Dosiervorrichtung mit dem Eingang des mit der Drehdecke beweglichen Vorratsbehälters verbindet. Von dem mit der Drehdecke beweglichen Vorratsbehälter wird das Rohstoffgemenge und/oder Scherben dann mittels einer weiteren Transport- und/oder Dosiereinrichtung (z.B. eine Rüttelrinne) auf die Öffnungen in der Drehdecke weiter verteilt. Wenn mindestens zwei Gruppen von Öffnungen vorgesehen sind, dann sind die Öffnungen der einen Gruppe in radialer Richtung versetzt zu den Öffnungen der weiteren Gruppe angeordnet, so dass die Oberfläche der Glasschmelze gleichmäßig mit dem zugeführten Rohstoffgemenge/Glasscherben versehen werden kann.

In einem Ausführungsbeispiel ist die Glasschmelzwanne mit einer Anzahl von Elektroden zur Erwärmung der Glasschmelze versehen, wobei die erforderliche Anzahl der die Glasschmelze im Produktionsbetriebszustand erwärmenden Elektroden und ihre Energieversorgung auf der Basis der für einen vorgegebenen Glas-Durchsatz und mit einer geforderten Glasqualität notwendigen Schmelz- und Läuterenergie bestimmt ist. Hierfür kann als Randbedingungs-Parameter die Stromdichte auf der Oberfläche der jeweiligen Elektrode, die den Wert von 1,5 A/cm² bis 2 A/cm² nicht überschreiten soll, herangezogen werden. Zudem sollte eine Stromtragfähigkeit des Elektrodenhaltersystems von etwa 3.600 A nicht überschritten werden.

Aufgrund der Anordnung der Elektroden an dem Innenwandungsabschnitt und dem Außenwandungsabschnitt werden Elektroden, z.B. Schwenk-Top-Elektroden, beispielsweise auf mindestens zwei umlaufenden, konzentrischen Kreisen oder kreisartigen Linien (im horizontalen Querschnitt betrachtet) angeordnet und derart miteinander verschaltet, dass eine Spannung von 500 V (aus Sicherheitsgründen) sowie eine Stromstärke von 3.600 A nicht überschritten wird. Der äußere (größere) Kreis/Linie befindet sich in einem radialen Abstand von 150 bis 800 mm, typischerweise 330 mm, von der Heißraumseite des Außenwandungsabschnitts nach innen gerichtet, während der innere (kleinere) Kreis/Linie in einem Abstand von 120 mm bis 800 mm, typischerweise 330 mm, von der Heißraumseite des Innenwandabschnitts nach innen, also zum Wanneninnenraum gerichtet, angeordnet ist.

Für die Energieversorgung der Elektroden ist eine Energieversorgungseinrichtung vorgesehen, welche eine Verschaltung realisiert, welche eine gleichmäßige, symmetrische Belastung der Elektroden bewirkt. Geeignete elektrische Verschaltungen bilden die Anordnung der Zeiger im elektrischen Zeigerdiagramm auf eine geometrisch ähnliche Anordnung der Elektroden in der jeweiligen neuartigen Glasschmelzwanne ab. Die Anzahl und Anordnung der Zeiger im elektrischen Zeigerdiagramm ergibt sich aus der Anzahl und Konfiguration in der Energieversorgungseinrichtung vorgesehenen Transformatoren. Diese können in verschiedenen elektrischen Verschaltungen ausgeführt werden, beispielsweise:
- Scott-T-Schaltung - hierbei beträgt die Anzahl der angeschlossenen Elektroden ein Vielfaches von vier,
- Verkettetes Dreiphasen-System - hierbei beträgt die Anzahl der angeschlossenen Elektroden ein Vielfaches von drei,
- Offenes Dreiphasen-System - hierbei beträgt die Anzahl der angeschlossenen Elektroden ein Vielfaches von 6.

Das offene Dreiphasen-System bietet Vorteile in Bezug auf eine geringere Belastung der Schmelzelektroden und wird deshalb bevorzugt eingesetzt.

Weitere Variationsmöglichkeiten bestehen insbesondere beim offenen Dreiphasen-System in der unterschiedlichen Verschaltung der Primärseite der Transformatoren - hier sind insbesondere die Dreieckschaltung sowie die Sternschaltung möglich. Diese Verschaltungen können auch miteinander kombiniert werden.

Weiterhin ist eine Aufteilung der in dem Wanneninnenraum angeordneten Elektroden in zwei oder mehr Wanneninnenraum-Segmente denkbar. Dabei bilden dann die Elektroden jedes Segments ihren eigenen Heizkreis.

Bei einem Glasschmelzofen, der einen Wanneninnenraum mit der Form eines Hohlkörpersegments aufweist, wird die Energieversorgung der Elektroden entsprechend angepasst.

Die obige Aufgabe wird ebenfalls durch ein System aus zwei der oben beschriebenen Glasschmelzwannen gelöst, wobei die erste Glasschmelzwanne und die zweite Glasschmelzwanne derart nebeneinander angeordnet sind, dass sie einen gemeinsamen Freiraum ausbilden, wobei beispielsweise die erste Glasschmelzwanne und die zweite Glasschmelzwanne derart ausgebildet sind, dass Glasschmelzen in diesen produziert werden können, die eine unterschiedliche Zusammensetzung aufweisen.

Das obige System besitzt die Vorteile, die oben bereits in Bezug auf die (eine) Glasschmelzwanne beschrieben wurden. Zusätzlich ermöglicht es das System, dass gleichzeitig, mit einem vergleichsweise geringen Platzbedarf zwei unterschiedliche Glastypen hergestellt werden können. Alternativ können in den beiden Glasschmelzwannen Glasschmelzen mit der im Wesentlichen gleichen Zusammensetzung hergestellt und die produzierte Glasschmelze in Fließrichtung des Glases nach dem Abziehen durch die jeweilige, in jeder Glasschmelzwanne angeordnete Ausgangsöffnung zusammengeführt und gemeinsam homogenisiert und weiterverarbeitet werden. Es versteht sich, dass jede der zwei Glasschmelzwannen einen Wanneninnenraum mit einer Form aufweist, der einem Segment des oben beschriebenen Hohlkörpers entspricht, d.h. beispielsweise einen Winkel von mindestens 120 °, z.B. einen Winkel zwischen 120 ° und 160 °, in horizontaler Richtung überstreicht. Hinsichtlich des horizontalen Querschnitts umfasst der Wanneninnenraum jeder Glasschmelzwanne ein Ringsegment, wobei vorzugsweise die sonstigen Parameter der Glasschmelzwannen analog zu der (einen) Glasschmelzwanne mit der Form eines vollständigen Hohlkörpers gestaltet werden können.

Die beiden Glasschmelzwannen teilen sich den oben beschriebenen Freiraum, was eine hervorragende Platznutzung bewirkt, wobei der Innenwandungsabschnitt der seitlichen Wandung jeder Glasschmelzwanne jeweils einen Teil des Umfangs des Freiraums umgeben. Die beiden Glasschmelzwannen können auf gleicher Höhe nebeneinander oder mit einem Versatz in vertikaler Richtung nebeneinander angeordnet sein. Die Anordnung der beiden Glasschmelzwannen auf gleicher Höhe nebeneinander bedeutet, dass ihr Boden und/oder ihre seitlichen Wandungen in horizontaler Richtung im Wesentlichen auf der gleichen Höhe angeordnet sind. Alternativ können die beiden Glasschmelzwannen (z.B. ihr Boden und/oder ihre seitlichen Wandungen) in vertikaler Richtung leicht versetzt nebeneinander angeordnet sein. Beispielsweise können die Wanneninnenräume beider Glasschmelzwannen unterschiedliche Höhen aufweisen.

Der Vorteil des obigen Systems besteht zudem darin, dass der innen liegende Freiraum nicht nur von oben bzw. unten zugänglich ist, sondern auch durch einen Zwischenraum erreicht werden kann, der zwischen den beiden nebeneinander angeordneten Glasschmelzwannen liegt.

Analog zu dem Ausführungsbeispiel mit einer einzigen Glasschmelzwanne können die zwei Glasschmelzwannen oben mittels einer vorstehend beschriebenen Drehdecke abgedeckt sein. Es ist hierbei von Vorteil, wenn für jede der beiden Glasschmelzwannen mindestens eine separate Öffnung zur Zuführung des Rohstoffgemenges und/oder der Scherben und eine entsprechende separate Zuführvorrichtung vorgesehen ist. Dies ist insbesondere von Vorteil, wenn in den beiden Glasschmelzwannen Gläser mit unterschiedlicher Zusammensetzung hergestellt werden.

Die obige Aufgabe wird zudem durch eine Glasschmelzanlage mit mindestens einer oben beschriebenen Glasschmelzwanne oder mit einem oben beschriebenen System gelöst, wobei die Glasschmelzanlage ferner ein Zuführungssystem zur Zuführung von Rohstoffgemenge und/oder Glasscherben und eine Energieversorgungseinrichtung für die Vielzahl der Elektroden aufweist, wobei die Energieversorgungseinrichtung mit jeder Elektrode verbunden ist. Die Glasschmelzanlage hat die oben zur Glasschmelzwanne erläuterten Vorteile.

Die obige Aufgabe wird ferner gelöst durch ein Verfahren zur Herstellung einer oben beschriebenen Glasschmelzwanne mit den folgenden Schritten:
- Bereitstellung von Palisadenelementen für die seitliche Wandung der Glasschmelzwanne,
- Anordnung und Festlegung der Palisadenelemente auf oder an einem Boden der Glasschmelzwanne derart, dass die seitliche Wandung einen Innenwandungsabschnitt und einen, dem Innenwandungsabschnitt gegenüber liegenden Außenwandungsabschnitt ausbildet, dass die dem Wanneninnenraum zugewandte Heißraumseite des Innenwandungsabschnitts und die dem Wanneninnenraum zugewandte Heißraumseite des Außenwandungsabschnitts im Wesentlichen die Form von inneren und äußeren Mantelflächen eines Hohlkörpers mit einem in vertikaler Richtung durchgehenden Hohlraum oder eines entsprechenden Hohlkörpersegments aufweisen, wobei der Hohlkörper beispielsweise ein Hohlzylinder oder ein Hohlprisma ist, und dass der Innenwandungsabschnitt einen dem Hohlraum entsprechenden, durchgehenden, sich in vertikaler Richtung erstreckenden Freiraum in Bezug auf seinen Umfang zumindest teilweise derart umgibt und nach Innen abschließt, dass in den Freiraum keine Glasschmelze gelangt.

Mit dem obigen Verfahren kann die oben dargestellte Glasschmelzwanne auf einfache und kostengünstige Weise errichtet werden. Oben wurde bereits beschrieben, dass die Palisadenelemente nebeneinander und gegebenenfalls auch übereinander angeordnet werden können. Die Festlegung der Palisadenelemente erfolgt vorzugsweise über das oben beschriebene Innenstahlgerüst und Außenstahlgerüst. Die für die Palisadenelemente verwendbaren Materialien sind ebenfalls bereits oben angegeben.

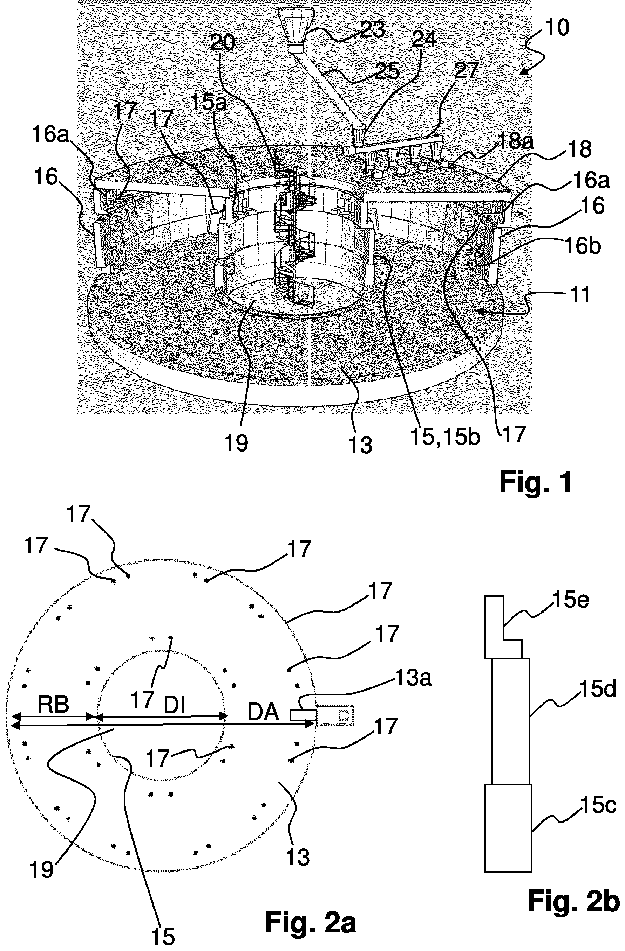

Die oben beschriebene Glasschmelzwanne eignet sich, das haben entsprechende Simulationen gezeigt, für Glas-Durchsatzmengen im Bereich 150 t/Tag bis 1.200 t/Tag. Auch anhand von Simulationen und verschiedenen Versuchen wurden die folgenden Parameter (siehe Fig. 2a und 10) der oben beschriebenen Glasschmelzwanne bestimmt. Der Durchmesser (im Folgenden Außendurchmesser DA) in Bezug auf die Heißraumseite des Außenwandungsabschnitts der seitlichen Wandung kann beispielsweise zwischen 10 m und 30 m betragen. Der Durchmesser (im Folgenden Innendurchmesser DI) in Bezug auf die Heißraumseite des Innenwandungsabschnitts der seitlichen Wandung kann beispielsweise zwischen 3 m und 12 m betragen. Die Ringbreite RB kann beispielsweise 2 m und 10 m betragen. Als Glasstandstiefe T können beispielsweise 1,2 m bis 3,5 m realisiert werden. Entsprechend weist der Wanneninnenraum eine größere Höhe (in vertikaler Richtung) auf. Die Schmelzfläche (Oberfläche der Glasschmelze im Produktionsbetriebszustand) kann z.B. zwischen 100 m² bis 400 m² betragen. Die oben beschriebene neuartige Glasschmelzwanne kann für Kalk-Natron-Gläser, Boro-Silikat-Gläser, Neutralgläser oder weitere Typen von Gläsern verwendet werden.

Die Erfindung wird nachfolgend anhand von Ausführungsbeispielen und unter Bezugnahme auf die Figuren erläutert.

Es zeigen schematisch:
- Fig. 1: ein erstes Ausführungsbeispiel einer Glasschmelzwanne in einer perspektivischen Ansicht von der Seite, teilweise aufgeschnitten,
- Fig. 2a, 2b: das Ausführungsbeispiel gemäß Fig. 1 in einem horizontalen Querschnitt (Fig. 2a) sowie den Innenwandungsabschnitt in einem vertikalen Querschnitt (Fig. 2b),
- Fig. 3: das Ausführungsbeispiel gemäß Fig. 1 in einem vertikalen Querschnitt,
- Fig. 4: das Ausführungsbeispiel gemäß Fig. 1 in einer weiteren perspektivischen Ansicht von der Seite, teilweise aufgeschnitten,
- Fig. 5: das Ausführungsbeispiel gemäß Fig. 1 in einer weiteren perspektivischen Ansicht von der Seite, teilweise aufgeschnitten,
- Fig. 6: das Ausführungsbeispiel gemäß Fig. 1 in einem vertikalen TeilQuerschnitt mit zwei Positionen einer Top-Elektrode,
- Fig. 7: einen vertikalen Querschnitt durch einen oberen Bereich einer seitlichen Wandung und durch eine Drehdecke eines zweiten Ausführungsbeispiels einer Glasschmelzwanne,
- Fig. 8: ein drittes Ausführungsbeispiel einer Glasschmelzwanne in einem vertikalen Querschnitt,
- Fig. 9: ein viertes Ausführungsbeispiel einer Glasschmelzwanne in einer perspektivischen Ansicht von der Seite, teilweise aufgeschnitten,
- Fig. 10: das Ausführungsbeispiel gemäß Fig. 9 in einem vertikalen Querschnitt,
- Fig. 11: ein Ausführungsbeispiel eines Systems aus zwei Glasschmelzwannen in einer perspektivischen Ansicht von der Seite ohne Abdeckung,
- Fig. 12: das System gemäß Fig. 1 in einer perspektivischen Ansicht von der Seite mit Abdeckung,
- Fig. 13: ein fünftes Ausführungsbeispiel einer Glasschmelzwannen in einer perspektivischen Ansicht von der Seite ohne Abdeckung und
- Fig. 14: ein sechstes Ausführungsbeispiel einer Glasschmelzwanne in einem horizontalen Querschnitt, das die Verschaltung der Elektroden dieses Ausführungsbeispiel veranschaulicht.

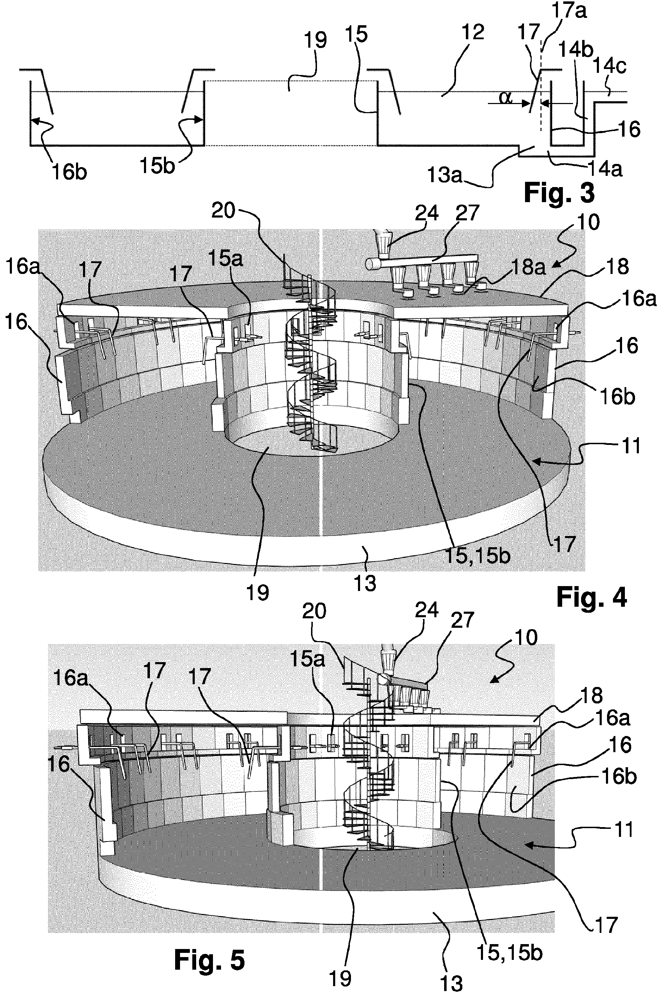

Das in den Fig. 1 bis 6 dargestellte erste Ausführungsbeispiel einer Glasschmelzwanne 10 ist in den Fig. 1, 4 und 5 teilweise aufgeschnitten dargestellt, so dass der Wanneninnenraum 11 sichtbar wird. Wie Fig. 2a zeigt, erstrecken sich ein Innenwandungsabschnitt 15 der seitlichen Wandung und ein Außenwandungsabschnitt 16 der seitlichen Wandung in einer abschnittsweise geraden, jedoch annähernd kreisförmig gebogenen Form vollständig um den inneren Rand bzw. äußeren Rand eines ringscheibenförmigen Bodens 13 herum. Der Wanneninnenraum 11 wird oben mittels einer Hänge-Drehdecke 18 abgedeckt. Der Innenwandungsabschnitt 15 der seitlichen Wandung des Wanneninnenraums 11 umschließt einen vertikal verlaufenden, durchgehenden Freiraum 19, in dem eine Ein- und Ausstiegseinrichtung für das Bedienpersonal in Form einer Wendeltreppe 20 angeordnet ist. Durch Öffnungen 15a des Innenwandungsabschnitts 15 und Öffnungen 16a des Außenwandungsabschnitts 16 ragen Elektroden 17 in die Glasschmelze 12, was in Fig. 3, 4 und 5 zu erkennen ist. Ebenfalls aus Fig. 2 und 3 ist entnehmbar, dass die Glasschmelzwanne 10 zudem im Bereich des Bodens 13 eine Auslassöffnung 13a mit einer Breite von beispielsweise 250 mm bis 1.200 mm und einer Höhe von beispielsweise 200 mm bis 900 mm aufweist, durch die das geschmolzene Glas abgezogen wird. Die Höhe wird hierbei vom Boden der Auslassöffnung bzw. Durchlass nach oben bis zum Boden der Glasschmelzwane 13 gemessen. Nach der Auslassöffnung 13a gelangt das geschmolzene Glas in einen Durchlass 14a, einen Riser 14b und einen Konditionierkanal 14c, wo die Glasschmelze homogenisiert wird. Der Konditionierkanal 14c kann beispielsweise zwischen 250 mm und 3.000 mm breit sein und eine Glasstandstiefe im Bereich zwischen 150 mm und 650 mm aufweisen, wobei sich die Beispielsgrößen auf die Variante 5 in Bezug auf die Abmessungen, die in der unten stehenden Tabelle dargestellt sind, beziehen. Die homogenisierte Glasschmelze kann dann beispielsweise zu Behälterglas verarbeitet werden.

Unter Nichtbeachtung der konkreten Struktur des Innenwandungsabschnitts 15 und des Außenwandungsabschnitts 16 der seitlichen Wandung, des Bodens 13 und der Drehdecke 18 ist in den Fig. 1 und 3 bis 6 erkennbar, dass der Wanneninnenraum 11, der von dem Boden 13, dem Innenwandungsabschnitt 15, dem Außenwandungsabschnitt 16 und der Drehdecke 18 umgeben ist, die Form eines Hohlzylinders aufweist. Die der Glasschmelze 12 bzw. dem Wanneninnenraum 11 zugewandte Heißraumseite 15b des Innenwandungsabschnitts 15 und die der Glasschmelze 12 bzw. dem Wanneninnenraum 11 zugewandte Heißraumseite 16b des Außenwandungsabschnitts 16 weisen im Wesentlichen die Form einer inneren Mantelfläche und einer äußeren Mantelfläche dieses Hohlzylinders auf. Der Innenwandungsabschnitt 15 und der Außenwandungsabschnitt 16 der seitlichen Wandung wird mittels eines Innenstahlgerüsts bzw. eines Außenstahlgerüsts gehalten, welches anhand des zweiten Ausführungsbeispiels einer Glasschmelzwanne genauer erläutert wird. **In** den Fig. 1 bis 5 wird dieses nicht gezeigt.

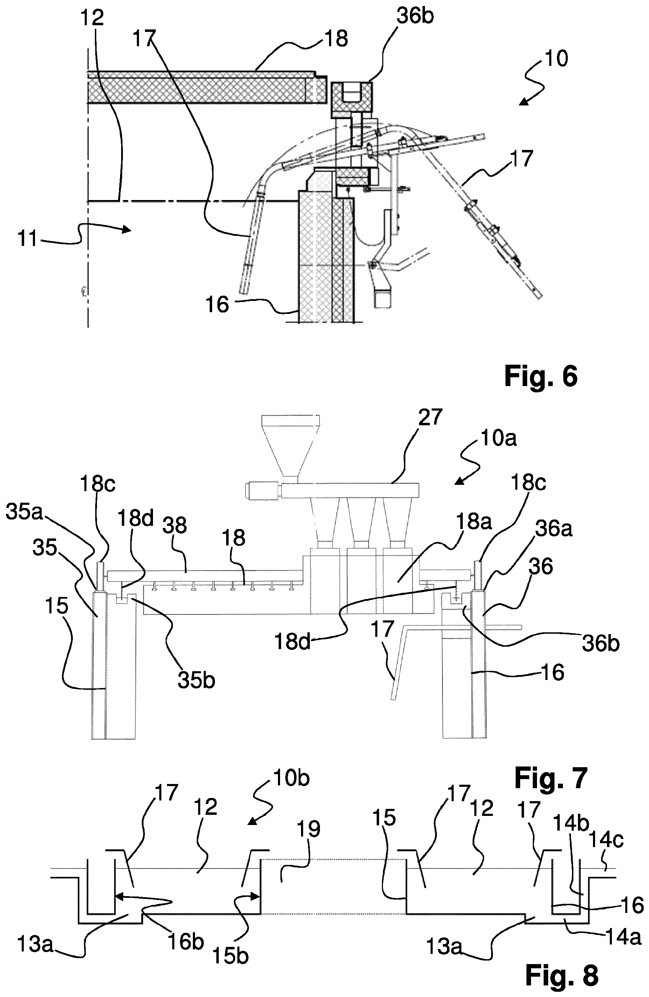

Jede an dem Innenwandungsabschnitt 15 der Wandung angeordnete Elektrode 17 ragt durch eine Öffnung 15a in der Wandung in den Wanneninnenraum und von oben in die Glasschmelze 12. Analog sind die Elektroden 17 an dem Außenwandungsabschnitt 16 der Wandung angeordnet. Hierbei ist jede Elektrode 17, wie Fig. 6 zeigt, verschwenkbar zwischen einer mittels durchgezogenen Linien gekennzeichneten ersten Position und einer mittels strichpunktierten Linien gekennzeichneten zweiten Position ausgebildet. **In** der ersten Position befindet sich die Elektrode 17 in dem Arbeitszustand, in dem die Elektrode die Glasschmelze 12 im Produktionsbetriebszustand aufgrund des Joule'schen Effekts Wärmeenergie zuführt. Insbesondere aus Fig. 2a und anhand der oben angegebenen Parameter der neuartigen Glasschmelzwanne ergibt sich, dass der Abstand der gegenüber liegenden Elektroden 17 des Innenwandungsabschnitts 15 und des Außenwandungsabschnitts 16 der Wandung deutlich kleiner ist als der Abstand gegenüber liegender Elektroden des Außenwandungsabschnitts 16, der mit dem Abstand der Elektroden in herkömmlichen zylindrischen oder prismenförmigen Glasschmelzwannen (ohne Freiraum) vergleichbar ist. Hierdurch kann die erforderliche Spannung reduziert und die Strömungen in der Glasschmelze und auf der Oberfläche der Glasschmelze besser kontrolliert werden. **In** dem Arbeitszustand ist jede Elektrode leicht geneigt (z.B. unter einem Winkel α von 5 ° bis 20 °) zur vertikalen Richtung 17a angeordnet (siehe Fig. 3), was das Hinein- und Hinausschwenken der Elektrode erleichtert. Konkret weist dieses Ausführungsbeispiel zwölf Elektroden 17 des Innenwandungsabschnitts 15 und vierundzwanzig Elektroden 17 des Außenwandungsabschnitts 16 der Wandung auf. Die Glasschmelzwanne des ersten Ausführungsbeispiels arbeitet nach dem Cold-Top-Prinzip.

Die ringscheibenförmige Drehdecke 18, welche den Wanneninnenraum 13 nach oben in Bezug auf Wärmeverlust, Staub und Abgase abdichtet, wobei Staub und Abgase durch leichten Unterdruck in ein Filtersystem abgesaugt werden, weist vier Öffnungen 18a auf, die in radialer Richtung nebeneinander liegen und durch die Rohstoffgemenge und/oder Scherben dem Wanneninnenraum 11, insbesondere der Oberfläche der Glasschmelze 12 zugeführt werden. Die Drehdecke ist als Hänge-Drehdecke ausgebildet und mit seiner Oberseite an einem sich über die Oberseite der Glasschmelzwanne 10 erstreckenden Stahlgerüst drehbar befestigt.

Eine Zuführeinrichtung weist einen ortsfesten Vorratsbehälter 23 mit einer Dosiereinrichtung auf. Der ortsfeste Vorratsbehälter 23 ist mit einem Vorratsbehälter 24 über ein flexibles Zuführrohr 25 verbunden, das bei der rotierenden Bewegung der Drehdecke 18 eine Verbindung zwischen dem ortsfesten Vorratsbehälter und dem mit der Drehdecke 18 rotierenden Vorratsbehälter 24 bewirkt und durch das Rohstoffgemenge und/oder Scherben von der Dosiereinrichtung dosiert von dem Vorratsbehälter 23 in den rotierenden Vorratsbehälter 24 transportiert wird. Von dem mit der Drehdecke 18 rotierenden ersten Vorratsbehälter 24 gelangen das Rohstoffgemenge und/oder Scherben in eine Schnecke oder Rüttelrinne 27 und werden durch diese über weitere mitrotierende Vorratsbehälter 28 durch jeweils eine durchgehenden Öffnung 18a hindurch mittels kleiner Rüttelrinnen in den Wanneninnenraum 11 und auf die Oberfläche der Glasschmelze 12 transportiert. Durch die rotierende Bewegung der Drehdecke 18 um eine etwa im Bereich der Wendeltreppe 20 verlaufenden Drehachse wird sukzessive die gesamte Oberfläche der Glasschmelze 12, die sich in dem Wanneninnenraum 11 befindet mit einer (kalten) Lage aus Rohstoffgemenge und/oder Scherben versehen. Es können zwei oder mehr derartige Zuführeinrichtungen über die Oberfläche der Drehdecke 18 verteilt angeordnet sein, wobei die Drehdecke dann weitere Gruppen von Öffnungen 18a aufweist. Vorzugsweise sind weitere Öffnungen 18a in radialer Richtung zu den anderen Öffnungen versetzt angeordnet, um eine bessere Verteilung von Rohstoffgemenge und/oder Scherben auf der Oberfläche der Glasschmelze 12 zu bewirken.

Die Wendeltreppe 20 ermöglicht es, dass das Bedienpersonal in den Freiraum 19 hineingelangt und diesen auch wieder gefahrlos verlassen kann. Die Wendeltreppe 20, welche auch als Leiter ausgeführt sein kann, ist mittig in dem im Wesentlichen zylindrischen Freiraum 19 angeordnet. Die Längsachse der Wendeltreppe kann parallel zu einer Längsachse des im Wesentlichen zylindrischen Freiraums verlaufen oder mit dieser zusammenfallen. In dem Freiraum 19 kann das Bedienpersonal die in dem Innenwandungsabschnitt 15 angeordneten Elektroden 17 zur Wartung und/oder Ersetzen analog zu dem in Fig. 6 gezeigten Vorgehen hinein- oder herausschwenken.

Der Innenwandungsabschnitt 15 und der Außenwandungsabschnitt 16 sind aus über- und nebeneinander angeordneten Palisadenelementen zusammengesetzt. Fig. 2b zeigt im vertikalen Querschnitt eine untere Reihe von breiteren quaderförmigen Palisadenelementen 15c, eine mittlere Reihe von schmaleren quaderförmigen Palisadenelementen 15d und eine obere Reihe von L-förmigen Palisadenelementen 15e. Der Außenwandungsabschnitt 16 ist im Wesentlichen analog aufgebaut. Bei der Herstellung der Glasschmelzwanne 10 werden diese Palisadenelemente 15c, 15d und 15e wie gezeigt neben- beziehungsweise übereinander angeordnet, an oder neben dem Boden 13 befestigt und, wie oben beschrieben, durch ein Stahlgerüst gehalten.

Folgende Auslegungsvarianten zeigen Realisierungsmöglichkeiten auf der Basis von Simulationen in Bezug auf eine zu dem ersten Ausführungsbeispiel analoge Glasschmelzwanne (siehe auch Fig. 2a und 10), wobei die Abmessungen immer in Bezug auf die jeweilige Heißraumseite gemessen werden. Derartige Simulationen können analog auch für die nachfolgend erläuterten weiteren Ausführungsbeispiele durchgeführt werden.

| Parameter | Einheit | Variante 0 | Variante 1 | Variante 2 | Variante 3 | Variante 4 |
|---|---|---|---|---|---|---|
| Glas-Durchsatz | t/Tag | 209 | 326 | 578 | 890 | 482 |
| Innendurchmesser DI | m | 3 | 7 | 7 | 7 | 8 |
| Ringbreite RB | m | 4 | 4 | 6 | 8 | 5 |
| Außendurchmesser DA | m | 11 | 15 | 19 | 23 | 18 |
| Glasstandstiefe T | m | 2,2 | 2,4 | 2,6 | 2,8 | 2,5 |
| Schmelzfläche | m² | 88 | 138,2 | 245 | 377 | 204,2 |
| Anzahl der Auslassöffnungen | | 1 | 2 | 2 | 2 | 2 |
| Abstand gegenüberliegender Elektroden | m | 3,3 | 3,3 | 5,3 | 7,3 | 4,3 |

| Parameter | Einheit | Variante 5 | Variante 6 | Variante 7 | Variante 8 | Variante 9 |
|---|---|---|---|---|---|---|
| Glas-Durchsatz | t/Tag | 623 | 778 | 444 | 727 | 950 |
| Innendurchmesser | m | 8 | 8 | 7 | 7 | 8 |
| Ringbreite | m | 6 | 7 | 5 | 7 | 8 |
| Außendurchmesser | m | 20 | 22 | 17 | 21 | 24 |
| Glasstandstiefe T | m | 2,6 | 2,7 | 2,6 | 3,0 | 3,2 |
| Schmelzfläche | m² | 263,9 | 329,9 | 188,5 | 307,9 | 402,1 |
| Anzahl der Auslassöffnungen | | 2 | 3 | 2 | 3 | 3 |
| Abstand gegenüberliegender Elektroden | m | 5,3 | 6,3 | 4 | 6 | 6,5 |

Eine weitere Skalierung der erfindungsgemäßen Glasschmelzwanne bis zu einer Glas-Durchsatzmenge von 1.200 t/Tag kann mit entsprechend erhöhtem Innendurchmesser, Außendurchmesser und Ringbreite analog erfolgen.

Im Folgenden soll anhand eines in Fig. 7 dargestellten zweiten Ausführungsbeispiels einer Glasschmelzwanne 10a der Aufbau der Glasschmelzwanne im Hinblick auf das Stahlgerüst genauer erläutert werden. Der Innenwandungsabschnitt 15 weist ein Innenstahlgerüst 35 und der Außenwandungsabschnitt 16 ein Außenstahlgerüst 36 auf, welche jeweils die Palisadenelemente 15c, 15d und 15e halten und festlegen. Auf der oberen Stirnfläche des Innenstahlgerüsts 35 und des Außenstahlgerüsts 36 ist jeweils eine kreisförmige Führungsschiene 35a, 36a vorgesehen, auf der Rollen 18c derart geführt werden, dass sich die Drehdecke um 360 ° in eine erste Drehrichtung und in die entgegengesetzte Drehrichtung drehen kann. Die Rollen 18c sind mit dem Stahlgerüst 38 der Drehdecke 18 verbunden. Weiter weist das Stahlgerüst 38 der Drehdecke 18 zwei ringförmige Abdichtschürzen 18d mit einem Dichtrand auf, wobei jede Abdichtschürze 18d jeweils in einer kreisförmigen Abdichtrinne 35b, 36b mit Sand abdichtend geführt wird. Die Abdichtrinne 35b, 36b ist auf der oberen Stirnseite des Innenwandungsabschnitts 15 bzw. des Außenwandungsabschnitts 16 angeordnet.

Bei dem in Fig. 7 gezeigten Ausführungsbeispiel sind in der Drehdecke 18 drei durchgehende Öffnungen 18a angeordnet, welche zur Zuführung von Rohstoffgemenge und/oder Scherben dienen.

Fig. 8 zeigt ein drittes Ausführungsbeispiel einer Glasschmelzwanne 10b, welche mit zwei einander gegenüber liegenden Auslassöffnungen 13a im Boden 13 der Glasschmelzwanne versehen ist. Durch die Verwendung von zwei Auslassöffnungen 13a kann der Glas-Durchsatz deutlich erhöht werden.

Das in den Fig. 9 und 10 gezeigte, vierte Ausführungsbeispiel einer Glasschmelzwanne 10c weist im Bereich des Innenwandungsabschnitts 15 und des Außenwandungsabschnitts 16 jeweils eine Stufe 45, 46 auf. Die Stufen 45, 46 sind zur Anordnung von Seitenelektroden 47 ausgebildet, wobei die Stufenbreite b mindestens 700 mm beträgt. Die Stufe 45, 46 kann beispielsweise eine Höhe h von 1m über dem Boden 13 aufweisen. Die Beheizung mittels Seitenelektroden 47 stellt eine zur Beheizung mittels Topelektroden alternative Beheizungsmöglichkeit dar. **In** Fig. 10 ist auch die Glasschmelze und die (kalte), auf der Glasschmelze angeordnete Lage aus Rohstoffgemenge und/oder Scherben 42 eingezeichnet. Die Drehdecke 18 mit Öffnungen 18a für die Zuführung der Ausgangsstoffe sind ebenfalls skizziert. Analog zu der oben beschriebenen Topelektrode ragt die Seitenelektrode 47 unter einem kleinen Winkel geneigt (0° bis 20 °) zur vertikalen Richtung in die Glasschmelze 12 hinein. Sie kann ebenfalls ausgewechselt und gewartet werden und ist von außen bzw. von dem Freiraum 19 zugänglich. Auch in Bezug auf die Seitenelektroden 47 ist festzuhalten, dass diese aufgrund des mittigen, sich vertikal erstreckenden Freiraums 19 näher zueinander angeordnet werden können. Hierdurch kann die erforderliche Spannung reduziert und der Schmelz- und Läuterprozess kontrollierter durchgeführt werden. Die Elektroden sind zudem von außen bzw. von dem Freiraum 19 gut zugänglich.

Bei dem oben dargestellten Ausführungsbeispiel ist der Innenwandungsabschnitt 15 konzentrisch in dem Außenwandungsabschnitt 16 angeordnet. Eine nicht konzentrische Anordnung ist ebenfalls denkbar.

Fig. 13 zeigt ein weiteres Ausführungsbeispiel einer vollständig umlaufenden Glasschmelzwanne 310, bei dem der Innenwandungsabschnitt 315 und der Außenwandungsabschnitt zusammen einen Wanneninnenraum 311 ausbilden, der die Form eines Hohlprismas (genauer: eines 6-seitigen Hohlprismas) aufweist. Die Heißraumseiten 315b, 316b des Innenwandungsabschnitts 315 bzw. des Außenwandungsabschnitts 316 bilden somit die inneren und äußeren Mantelflächen dieses Hohlprismas. Die Glasschmelzwanne 310 weist außerdem zwei gegenüber liegende, in dem Außenwandungsabschnitt angeordnete Auslassöffnungen 313a auf, die direkt über dem Boden 313 liegen. Der Innenwandungsabschnitt 315 umgibt den Freiraum 319 vollständig. Sowohl der Innenwandungsabschnitt 315 als auch der Außenwandungsabschnitt 316 sind aus jeweils 6 geraden Wandungsteilen zusammengesetzt, wobei der Innenwandungsabschnitt 315 in dem Außenwandungsabschnitt 316 konzentrisch angeordnet ist. Die in dem ersten bis vierten Ausführungsbeispiel verwendeten Bezugszeichen werden für dieses Ausführungsbeispiel analog verwendet, jedoch lediglich um 300 erhöht. Es wird daher auch auf die obigen Erläuterungen zum ersten Ausführungsbeispiel verwiesen. Die Glasschmelzwanne 310 kann ebenso wie das erste Ausführungsbeispiel eine ringförmige Drehdecke mit Öffnungen für die Zuführung von Rohstoffgemenge/Scherben aufweisen, diese ist jedoch aus Klarheitsgründen nicht dargestellt. Die Elektroden sind sehr schematisch skizziert, die Glasschmelzwanne 310 weist zwölf Top-Elektroden, jeweils gepaart an dem Innenwandungsabschnitt 315 und vierundzwanzig Top-Elektroden, ebenfalls jeweils gepaart an dem Außenwandungsabschnitt 316 auf.

Anhand eines weiteren, in Fig. 14 dargestellten Ausführungsbeispiels einer Glasschmelzwanne 410 soll die Verschaltung der Elektroden 417 erläutert werden. Die in dem ersten bis vierten Ausführungsbeispiel verwendeten Bezugszeichen werden für dieses Ausführungsbeispiel analog verwendet, jedoch lediglich um 400 erhöht. Es wird daher auch auf die obigen Erläuterungen zum ersten Ausführungsbeispiel verwiesen. Dieses Ausführungsbeispiel weist einen hohlzylinderförmigen Wanneninnenraum 411 auf, der durch den Innenwandabschnitt 415, der den Freiraum 419 umgibt, und durch den Außenwandabschnitt 416 seitlich begrenzt wird. **In** dem dem Innenwandabschnitt 415 angrenzenden Bereich sind sechs Topelektroden 417 und in dem dem Außenwandabschnitt 416 angrenzenden Bereich sind zwölf Topelektroden 417 angeordnet.

Bei diesen Ausführungsbeispiel ist eine (nicht dargestellte) Energieversorgungseinrichtung vorgesehen, welche drei Transformatoren aufweist, welche die insgesamt achtzehn Elektroden 417 versorgt. Die achtzehn Elektroden werden in drei Gruppen zu je 6 Elektroden aufgeteilt und jede Gruppe einem Transformator zugeordnet, wobei das offene Dreiphasen-System zum Einsatz gelangt. Zwei Transformatoren sind primärseitig in Dreieckschaltung (um 60 ° versetzt, erste Dreieckschaltung gekennzeichnet in Fig. 14 durch gepunktete Linien und zweite Dreieckschaltung gekennzeichnet durch gestrichelte Linien), wobei die Dreieckschaltungen jeweils gegenüber liegende Elektroden 417 des Innenwandungsabschnitts 415 und des Außenwandungsabschnitts 416 einbeziehen. Ferner ist ein Transformator in Sternschaltung ausgeführt (siehe Verschaltung gekennzeichnet durch Strich-Punkt-Linien), wobei die Sternschaltung lediglich an dem Außenwandungsabschnitt 416 angeordnete Elektroden einbezieht. Da die geometrische/mechanische Anordnung der Elektroden in der Glasschmelzwanne der Lage der Zeiger im elektrischen Zeigerdiagramm folgt, ergibt sich eine gleichmäßige Strombelastung aller Elektroden. Da weiterhin die Wegstrecken zwischen zusammengehörigen Elektroden/"Heizpartnern" nicht zu lang sind, ergeben sich handhabbare Werte für die Betriebsspannung/Sekundärspannung.

Um die oben erwähnten Grenzen von Elektrodenstromdichte und Elektrodenstrom je Topelektrode nicht zu überschreiten, ist generell - also auch bei anderen Ausführungsbeispielen - eine Installation von je zwei dicht nebeneinander angeordneten, elektrisch parallel geschalteten Topelektroden (anstelle einer Topelektrode) möglich. Hierdurch kann die Elektrodenanzahl dieses Ausführungsbeispiels auf 36 verdoppelt werden. Die dicht nebeneinander angeordneten und parallel geschalteten Topelektroden bilden elektrisch gewissermaßen eine zusammenhängende "virtuelle Elektrode".

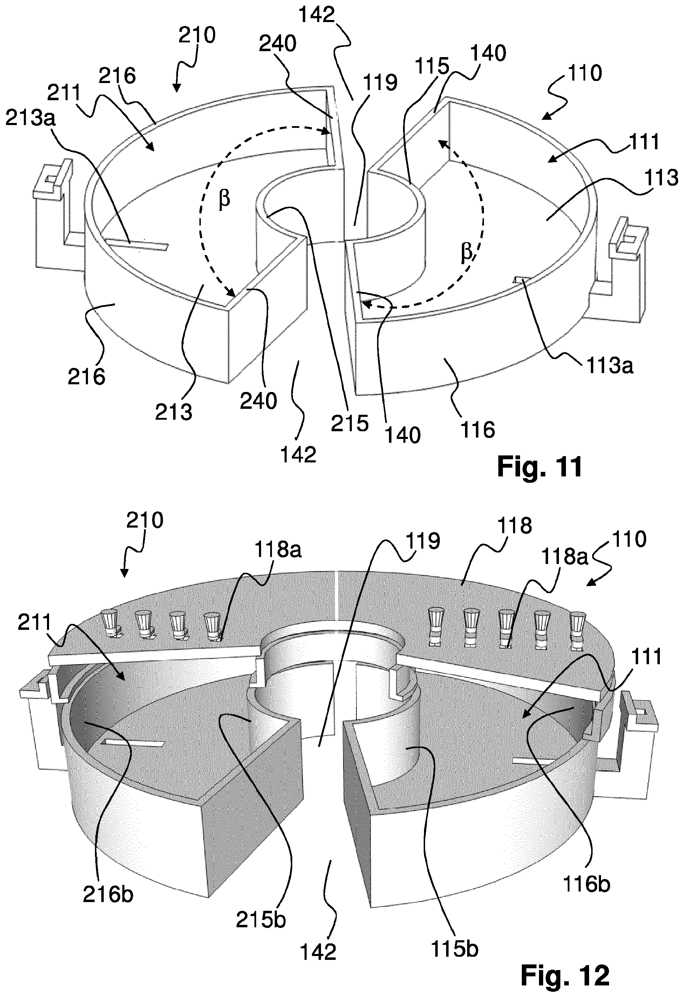

Schließlich wird in den Fig. 11 und 12 ein Ausführungsbeispiel für ein System aus zwei Glasschmelzwannen 110, 210 gezeigt, die derart nebeneinander angeordnet sind, dass sie einen gemeinsamen Freiraum 119 aufweisen. Die in den beiden Glasschmelzwannen 110, 210 angeordneten Elektroden sind nicht gezeigt, werden aber analog zu den oben beschriebenen Ausführungsbespielen an dem Innenwandungsabschnitt und dem Außenwandungsabschnitt angeordnet. Die in dem ersten bis vierten Ausführungsbeispiel verwendeten Bezugszeichen werden für dieses Ausführungsbeispiel analog verwendet, jedoch lediglich um 100 bzw. 200 erhöht. Es wird daher auf die obigen Erläuterungen zum ersten Ausführungsbeispiel verwiesen.

Die Wanneninnenräume 111, 211 werden durch den jeweiligen Boden 113, 213 sowie die seitlichen Wandungen bestehend aus dem Innenwandungsabschnitt 115, 215, dem Außenwandungsabschnitt 116, 216 sowie den dazwischen liegenden Zwischenwandungsabschnitten 140, 240 gebildet. In dem Boden 113, 213 jeder Glasschmelzwanne 110, 210 ist eine Auslassöffnung 113a, 213a angeordnet, durch die das geschmolzene Glas abgezogen wird. Zwischen den beiden Glasschmelzwannen ist auf beiden Seiten jeweils ein Zwischenraum 142 vorgesehen, durch welchen Bedienpersonal zu dem Freiraum 119 gelangen kann. Die beiden Wanneninnenräume 111, 211 sind oben mittels einer (ringscheiben-förmigen) Drehdecke abgeschlossen. Diese Drehdecke 118 weist zwei Gruppen von je vier bzw. fünf in radialer Richtung nebeneinander liegenden Öffnungen 118a auf, durch die auf eine zu dem Ausführungsbeispiel der Fig. 1 analoge Weise über eine Zuführeinrichtung oder zwei separate Zuführeinrichtungen dem jeweiligen Wanneninnenraum 111, 211 Rohstoffgemenge und/oder Scherben zugeführt werden kann. Die Elektroden sind hier nicht eingezeichnet, können aber analog zu den obigen Ausführungsbeispielen gestaltet sein.

Die Wanneninnenräume 111, 211 haben jeweils die Form eines Hohlzylinder-Segments, das sich nicht entlang des gesamten Umfangs eines Voll-Hohlzylinders sondern lediglich über einen Teil dieses Umfangs erstreckt. Anders ausgedrückt, überstreicht jeder Wanneninnenraum in horizontaler Richtung einen Winkelbereich β von beispielsweise ca. 150 °. Die dem Wanneninnenraum 111, 211 bzw. der Glasschmelze zugewandte Heißraumseite 115b, 215b des Innenwandungsabschnitts 115, 215 und die dem Wanneninnenraum 111, 211 bzw. der Glasschmelze zugewandte Heißraumseite 116b, 216b des Außenwandungsabschnitts 116, 216 bilden innere und äußere Mantelflächensegmente des Hohlzylinder aus.

Das System aus zwei nebeneinander angeordneten Glasschmelzwannen mit einem zentralen Freiraum 119 ermöglicht die gleichzeitige Herstellung von Glasprodukten mit unterschiedlicher Zusammensetzung. Die Zugänglichkeit des Innenwandungsabschnitts 115, 215 der jeweiligen Glasschmelzwanne 110, 210 wird auf einfache Weise durch die beiden Zwischenräume 142 bewirkt, die mit dem inneren Freiraum 119 verbunden sind. Die beiden Glasschmelzwannen können auch für die Herstellung von Glas mit der gleichen Zusammensetzung verwendet werden, wobei in diesem Fall das abgezogene Glas in Fließrichtung nach der Auslassöffnung 113a, 213a zusammengeführt werden kann.

Die erfindungsgemäße Glasschmelzanlage ermöglicht eine Skalierung auf einen Glas-Durchsatz von bis zu 1.200 t/Tag im Produktionsbetriebszustand, wobei auch zwei Gläser mit unterschiedlicher Zusammensetzung gleichzeitig produziert werden können. Elektroden können an dem oder durch den inneren, den Freiraum 19, 119, 319 umgebenden Innenwandungsabschnitt 15, 115, 215, 315 hindurch und an oder durch den außen liegenden Außenwandungsabschnitt 16, 116, 216, 316 von oben, von der Seite oder von unten in die Glasschmelze eingebracht werden, um die Strömung in der Glasschmelze besser zu steuern und den Abstand zu verringern. Hierdurch kann die erforderliche Spannung reduziert und damit die Sicherheit der die Glasschmelzanlage betreuenden Personen verbessert werden.

## Patentansprüche

1. Glasschmelzwanne (10, 10a, 10b, 10c, 110, 210, 310, 410) für eine im Produktionsbetriebszustand vollelektrische Beheizung der Glasschmelze (12) mit einer seitlichen Wandung aus feuerfestem Material, welche einen Wanneninnenraum (11, 111, 211, 311, 411) seitlich umschließt, wobei im Produktionsbetriebszustand die Glasschmelze (12) in dem Wanneninnenraum angeordnet ist, wobei die seitliche Wandung einen Innenwandungsabschnitt (15, 115, 215, 315, 415) und einen, dem Innenwandungsabschnitt gegenüber liegenden Außenwandungsabschnitt (16, 116, 216, 316, 416) aufweist, wobei die dem Wanneninnenraum zugewandte Heißraumseite (15b, 115b, 215b, 315b) des Innenwandungsabschnitts (15, 115, 215, 315, 415) und die dem Wanneninnenraum zugewandte Heißraumseite (16b, 116b, 216b, 316b) des Außenwandungsabschnitts (16, 116, 216, 316, 416) im Wesentlichen die Form von inneren und äußeren Mantelflächen eines Hohlkörpers mit einem durchgehenden Hohlraum oder eines entsprechenden Hohlkörpersegments aufweisen, wobei der Hohlkörper beispielsweise ein Hohlzylinder oder ein Hohlprisma ist, wobei der Innenwandungsabschnitt (15, 115, 215, 315, 415) in Bezug auf seinen Umfang zumindest teilweise einen dem Hohlraum entsprechenden durchgehenden, sich in vertikaler Richtung erstreckenden Freiraum (19, 119, 319, 419) derart umgibt und nach Innen abschließt, dass in den Freiraum keine Glasschmelze gelangt.

2. Glasschmelzwanne nach Anspruch 1, **dadurch gekennzeichnet, dass** diese mindestens eine Auslassöffnung (13a, 113a, 213a, 313a) aufweist, welche im Bereich des Außenwandungsabschnitts (16, 116, 216, 316) der seitlichen Wandung nahe des Bodens des Wanneninnenraums angeordnet ist.

3. Glasschmelzwanne nach einem der vorhergehenden Ansprüche, **dadurch gekennzeichnet, dass** die Glasschmelzwanne eine Vielzahl von Elektroden (17, 47, 317, 417) aufweist, welche die Glasschmelze im Produktionsbetriebszustand beheizt, wobei eine erste Gruppe der Vielzahl von Elektroden in einem an den Innenwandungsabschnitt (15, 115, 215, 315, 415) angrenzenden Bereich in die Glasschmelze (12) hineinragt und eine zweite Gruppe der Vielzahl von Elektroden in einem an den Außenwandungsabschnitt (16, 116, 216, 316, 416) angrenzenden Bereich in die Glasschmelze (12) hineinragt.

4. Glasschmelzwanne nach einem der vorhergehenden Ansprüche, **dadurch gekennzeichnet, dass** die Glasschmelzwanne derart ausgebildet ist, dass sie nach dem Cold-Top-Prinzip betreibbar ist.

5. Glasschmelzwanne nach einem der vorhergehenden Ansprüche, **dadurch gekennzeichnet, dass** der Innenwandungsabschnitt und/oder der Außenwandungsabschnitt an der jeweiligen Heißraumseite mindestens eine Stufe (45, 46) und/oder mindestens eine Ausnehmung (15a, 16a) aufweist.

6. Glasschmelzwanne nach einem der vorhergehenden Ansprüche, **dadurch gekennzeichnet, dass** der Durchmesser des von dem Innenwandungsabschnitt zumindest teilweise umgebenen Freiraums (19, 119, 319, 419) mindestens 3 m beträgt.

7. Glasschmelzwanne nach einem der vorhergehenden Ansprüche, **dadurch gekennzeichnet, dass** in dem Freiraum (19, 119, 319, 419) eine Ein- und/oder Ausstiegseinrichtung (20) angeordnet ist, welche für einen Ein- und/oder Ausstieg für Bedienpersonal nach oben und/oder unten eingerichtet ist.

8. Glasschmelzwanne nach einem der vorhergehenden Ansprüche, **dadurch gekennzeichnet, dass** der von dem Hohlkörpersegment in horizontaler Richtung überstrichene Winkel (β) mindestens 120° beträgt.

9. Glasschmelzwanne nach einem der vorhergehenden Ansprüche, **dadurch gekennzeichnet, dass** der Wanneninnenraum nach oben durch eine Drehdecke (18, 118) abgedeckt ist, welche im Wesentlichen die Form einer Ringscheibe oder eines Ringscheibensegments aufweist und welche vorzugsweise als Hänge-Drehdecke ausgebildet ist.

10. Glasschmelzwanne nach Anspruch 9, **dadurch gekennzeichnet, dass** die Zuführungseinrichtung und die Drehdecke (18, 118) derart ausgebildet sind, dass die Zuführung von Rohstoffgemenge und/oder Scherben in die Glasschmelzwanne durch mindestens eine entsprechende Öffnung (18a, 118a) in der Drehdecke erfolgt.

11. Glasschmelzwanne nach einem der vorhergehenden Ansprüche, **dadurch gekennzeichnet, dass** jede Elektrode (17) der ersten Gruppe und/oder der zweiten Gruppe derart ausgebildet ist, dass sie im Produktionsbetriebszustand senkrecht oder unter einem kleinen Winkel (α) zur vertikalen Richtung (17a) schräg von oben in die Glasschmelze (12) hineinragt und die Glasschmelze von oben beheizt und dass sie vorzugsweise in den Wanneninnenraum hinein- und hinausschwenkbar ausgebildet ist.

12. Glasschmelzwanne nach einem der vorhergehenden Ansprüche, **dadurch gekennzeichnet, dass** diese mit der Vielzahl von Elektroden (17, 47, 317, 417) zur Erwärmung der Glasschmelze versehen ist, wobei die erforderliche Anzahl der die Glasschmelze im Produktionsbetriebszustand erwärmenden Elektroden und ihre Energieversorgung auf der Basis der für einen vorgegebenen Glas-Durchsatz und der geforderten Glasqualität notwendigen Schmelz- und Läuterenergie bestimmt ist.

13. Glasschmelzwanne nach einem der vorhergehenden Ansprüche, **dadurch gekennzeichnet, dass** der Innenwandungsabschnitt (15) mittels eines an einer Kaltraumseite des Innenwandungsabschnitts angeordnetes Innenstahlgerüsts (35) und dass der Außenwandungsabschnitt (16) mittels eines an einer Kaltraumseite des Außenwandungsabschnitts angeordnetes Außenstahlgerüsts (36) gehalten ist.

14. System aus zwei Glasschmelzwannen (110, 210) nach einem der vorhergehenden Ansprüche, wobei die erste Glasschmelzwanne (110) und die zweite Glasschmelzwanne (210) derart nebeneinander angeordnet sind, dass sie einen gemeinsamen Freiraum (119) ausbilden, wobei vorzugsweise die erste Glasschmelzwanne und die zweite Glasschmelzwanne derart ausgebildet sind, dass in diesen Glasschmelzen produziert werden können, die eine unterschiedliche Zusammensetzung aufweisen.

15. Glasschmelzanlage mit mindestens einer Glasschmelzwanne (10, 10a, 10b, 10c, 110, 210, 310, 410) nach einem der Ansprüche 1 bis 13 oder mit einem System nach Anspruch 14, wobei die Glasschmelzanlage ferner ein Zuführungssystem zur Zuführung von Rohstoffgemenge und/oder Glasscherben und eine Energieversorgungseinrichtung für die Vielzahl der Elektroden aufweist, wobei die Energieversorgungseinrichtung mit jeder Elektrode verbunden ist.

16. Verfahren zur Herstellung einer Glasschmelzwanne (10, 10a, 10b, 10c, 110, 210, 310, 410) nach einem der Ansprüche 1 bis 13, mit den folgenden Schritten:
• Bereitstellung von Palisadenelementen für die seitliche Wandung der Glasschmelzwanne,
• Anordnung und Festlegung der Palisadenelemente auf oder an einem Boden der Glasschmelzwanne derart, dass die seitliche Wandung einen Innenwandungsabschnitt (15, 115, 215, 315, 415) und einen, dem Innenwandungsabschnitt gegenüber liegenden Außenwandungsabschnitt (16, 116, 216, 316, 416) ausbildet, dass die dem Wanneninnenraum (11, 111, 211, 311, 411) zugewandte Heißraumseite (15b, 115b, 215b, 315b) des Innenwandungsabschnitts der Wandung und die dem Wanneninnenraum zugewandte Heißraumseite (16b, 116b, 216b, 316b) des Außenwandungsabschnitts der Wandung im Wesentlichen die Form von inneren und äußeren Mantelflächen eines Hohlkörpers mit einem durchgehenden Hohlraum oder eines entsprechenden Hohlkörpersegments aufweisen, wobei der Hohlkörper beispielsweise ein Hohlzylinder oder ein Hohlprisma ist, und dass der Innenwandungsabschnitt (15, 115, 215) einen dem Hohlraum entsprechenden durchgehenden, sich in vertikaler Richtung erstreckenden Freiraum (19, 119, 319, 419) in Bezug auf seinen Umfang zumindest teilweise derart umgibt und nach Innen abschließt, dass in den Freiraum keine Glasschmelze gelangt.

## Claims

1. A glass melting furnace (10, 10a, 10b, 10c, 110, 210, 310, 410) for all-electric heating of the glass melt (12) in the production operating state, having a sidewall made of refractory material that laterally encloses an inner space (11, 111, 211, 311, 411) of the furnace, wherein in the production operating state the glass melt (12) is arranged in the inner space of the furnace, wherein the sidewall has an inner wall section (15, 115, 215, 315, 415) and an outer wall section (16, 116, 216, 316, 416) located opposite the inner wall section, wherein the hot space side (15b, 115b, 215b, 315b) of the inner wall section (15, 115, 215, 315, 415) facing the inner space of the furnace and the hot space side (16b, 116b, 216b, 316b) of the outer wall section (16, 116, 216, 316, 416) facing the inner space of the furnace essentially have the shape of inner and outer shell surfaces of a hollow body with a through-going hollow space or a corresponding hollow body segment, wherein the hollow body is, for example, a hollow cylinder or a hollow prism, wherein the inner wall section (15, 115, 215, 315, 415) in relation to its circumference at least partially encloses and limits inward to a through-going open space (19, 119, 319, 419) extending in vertical direction and corresponding to the hollow space in such a way that glass melt cannot enter the open space.

2. The glass melting furnace according to claim 1, **characterized in that** it comprises at least one outlet opening (13a, 113a, 213a, 313a) which is located in the area of the outer wall section (16, 116, 216, 316) of the sidewall near the bottom of the inner space of the furnace.

3. The glass melting furnace according to any one of the preceding claims, **characterized in that** the glass melting furnace comprises a plurality of electrodes (17, 47, 317, 417) which heat the glass melt in the production operating state, wherein a first group of the plurality of electrodes projects into the glass melt (12) in an area adjacent to the inner wall section (15, 115, 215, 315, 415) and a second group of the plurality of electrodes projects into the glass melt (12) in an area adjacent to the outer wall section (16, 116, 216, 316, 416).

4. The glass melting furnace according to any one of the preceding claims, **characterized in that** the glass melting furnace is configured such that it can be operated according to the cold-top principle.

5. The glass melting furnace according to any one of the preceding claims, **characterized in that** the inner wall section and/or the outer wall section on the respective hot space side comprises at least one step (45, 46) and/or at least one recess (15a, 16a).

6. The glass melting furnace according to any one of the preceding claims, **characterized in that** the diameter of the open space (19, 119, 319, 419) at least partially enclosed by the inner wall section is at least 3 m.

7. The glass melting furnace according to any one of the preceding claims, **characterized in that** an entry device and/or exit device (20) is arranged in the open space (19, 119, 319, 419) and is configured to allow operating personnel to enter and/or exit in an upward and/or downward direction.

8. The glass melting furnace according to any one of the preceding claims, **characterized in that** the angle (β) covered by the hollow body segment in the horizontal direction is at least 120°.

9. The glass melting furnace according to any of the preceding claims, **characterized in that** the inner space of the furnace is covered at the top by a rotating ceiling (18, 118) which substantially has the shape of an annular disc or an annular disc segment and which is preferably configured as a hanging rotating ceiling.

10. The glass melting furnace according to claim 9, **characterized in that** the feed device and the rotating ceiling (18, 118) are configured in such a way that the raw material mixture and/or cullet is/are fed into the glass melting furnace through at least one corresponding opening (18a, 118a) in the rotating ceiling.

11. The glass melting furnace according to any one of the preceding claims, **characterized in that** each electrode (17) of the first group and/or of the second group is configured such that, in the production operating state, it projects perpendicularly or at a small angle (α) to the vertical direction (17a) from above into the glass melt (12) and heats the glass melt from above, and that it is preferably configured so that it can be pivoted in and out into the inner space of the furnace.

12. The glass melting furnace according to any one of the preceding claims, **characterized in that** it is provided with a plurality of electrodes (17, 47, 317, 417) for heating the glass melt, wherein the required number of electrodes heating the glass melt in the production operating state and their energy supply is determined on the basis of the melting and refining energy necessary for a predetermined glass throughput and the required glass quality.

13. The glass melting furnace according to any one of the preceding claims, **characterized in that** the inner wall section (15) is held by means of an inner steel structure (35) arranged on a cold space side of the inner wall section and that the outer wall section (16) is held by means of an outer steel structure (36) arranged on a cold space side of the outer wall section.

14. A system of two glass melting furnaces (110, 210) according to any one of the preceding claims, wherein the first glass melting furnace (110) and the second glass melting furnace (210) are positioned adjacently such that they form a common open space (119), wherein preferably the first glass melting furnace and the second glass melting furnace are configured such that glass melts having different compositions may be produced in them.

15. A glass melting facility having at least one glass melting furnace (10, 10a, 10b, 10c, 110, 210, 310, 410) according to any one of claims 1 to 13 or having a system according to claim 14, wherein the glass melting facility further comprises a feed system for feeding raw material mixture and/or glass cullet and an energy supply device for the plurality of electrodes, wherein the energy supply device is connected to each electrode.

16. A method for manufacturing a glass melting furnace (10, 10a, 10b, 10c, 110, 210, 310, 410) according to any one of claims 1 to 13, comprising the following steps:
• provision of palisade elements for the sidewall of the glass melting furnace,
• arranging and fixing the palisade elements on or at a bottom of the glass melting furnace in such a way that the sidewall forms an inner wall section (15, 115, 215, 315, 415) and an outer wall section (16, 116, 216, 316, 416) located opposite the inner wall section in such a way that the hot space side (15b, 115b, 215b, 315b) of the inner wall section of the wall facing the inner space of the furnace (11, 111, 211, 311, 411) and the hot space side (16b, 116b, 216b, 316b) of the outer wall section of the wall facing the inner space of the furnace essentially have the form of inner and outer shell surfaces of a hollow body with a through-going hollow space or a corresponding hollow body segment, wherein the hollow body is, for example, a hollow cylinder or a hollow prism, and that the inner wall section (15, 115, 215) in relation to its circumference at least partially encloses and limits inward to a through-going open space (19, 119, 319, 419) extending in vertical direction and corresponding to the hollow space in such a way that glass melt cannot enter the open space.

## Revendications

1. Cuve de fusion de verre (10, 10a, 10b, 10c, 110, 210, 310, 410) pour la chauffe entièrement électrique, en l'état de fonctionnement de production, du verre fondu (12), avec une paroi latérale en matériau réfractaire qui entoure latéralement un espace intérieur de cuve (11, 111, 211, 311, 411), le verre fondu (12) étant disposé, en l'état de fonctionnement de production, dans l'espace intérieur de cuve, la paroi latérale comprenant une zone intérieure de paroi (15, 115, 215, 315, 415) et une zone extérieure de paroi (16, 116, 216, 316, 416) opposée à la zone intérieure de paroi, le côté espace chaud (15b, 115b, 215b, 315b) de la zone intérieure de paroi (15, 115, 215, 315, 415), orienté vers l'espace intérieur de cuve, et le côté espace chaud (16b, 116b, 216b, 316b) de la zone extérieure de paroi, orienté vers l'espace intérieur de cuve, ayant essentiellement la forme de surfaces enveloppantes intérieure et extérieure d'un corps creux avec un espace creux continu ou d'un segment de corps creux correspondant, le corps creux étant par exemple un cylindre creux ou un prisme creux, la zone intérieure de paroi (15, 115, 215, 315, 415) entourant, au moins partiellement par rapport à son pourtour, et enfermant vers l'intérieur, un espace libre (19, 119, 319, 419) continu correspondant à l'espace creux et s'étendant verticalement, et cela de façon qu'aucun verre fondu n'arrive dans l'espace libre.

2. Cuve de fusion de verre selon la revendication 1, **caractérisée en ce que** celle-ci comprend au moins une ouverture de sortie (13a, 113a, 213a, 313a) qui est disposée dans la partie de la zone extérieure de paroi (16, 116, 216, 316) de la paroi latérale, proche du fond de l'espace intérieur de cuve.

3. Cuve de fusion de verre selon l'une des revendications précédentes, **caractérisée en ce que** la cuve de fusion de verre comprend une pluralité d'électrodes (17, 47, 317, 417) qui chauffe le verre fondu en l'état de fonctionnement de production, un premier groupe de la pluralité d'électrodes s'étendant dans le verre fondu (12) dans une partie adjacente à la zone intérieure de paroi (15, 115, 215, 315, 415) et un deuxième groupe de la pluralité d'électrodes s'étendant dans le verre fondu (12) dans une partie adjacente à la zone extérieure de paroi (16, 116, 216, 316, 416).

4. Cuve de fusion de verre selon l'une des revendications précédentes, **caractérisée en ce que** la cuve de fusion de verre est configurée de façon qu'elle puisse fonctionner selon le principe « Cold-top ».

5. Cuve de fusion de verre selon l'une des revendications précédentes, **caractérisée en ce que** la zone intérieure de paroi et/ou la zone extérieure de paroi comprend, du côté espace chaud respectif, au moins un étagement (45, 46) et/ou au moins un évidement (15a, 16a).

6. Cuve de fusion de verre selon l'une des revendications précédentes, **caractérisée en ce que** le diamètre de l'espace libre (19, 119, 319, 419) entouré au moins partiellement par la zone intérieure de paroi, est d'au moins 3m.

7. Cuve de fusion de verre selon l'une des revendications précédentes, **caractérisée en ce que**, dans l'espace libre (19,119, 319, 419), un dispositif d'entrée et/ou de sortie (20) est disposé qui est agencé pour une entrée et/ou une sortie, vers le haut et/ou vers le bas, de personnel opérationnel.

8. Cuve de fusion de verre selon l'une des revendications précédentes, **caractérisée en ce que** l'angle (β) occupé par le segment de corps creux en direction horizontale, est d'au moins 120°.

9. Cuve de fusion de verre selon l'une des revendications précédentes, **caractérisée en ce que** l'espace intérieur de cuve est recouvert vers le haut par un plafond tournant (18, 118) qui a essentiellement la forme d'un disque annulaire ou d'un segment de disque annulaire et qui est configuré de préférence comme un plafond tournant suspendu.

10. Cuve de fusion de verre selon la revendication 9, **caractérisée en ce que** le dispositif d'amenée et le plafond tournant (18, 118) sont configurés de façon que l'amenée du mélange de matière brute et/ou d'éclats dans la cuve de fusion de verre soit effectué par une ouverture correspondante (18a, 118a) dans le plafond tournant.

11. Cuve de fusion de verre selon l'une des revendications précédentes, **caractérisée en ce que** chaque électrode (17) du premier groupe et/ou du deuxième groupe est configurée de façon qu'elle s'étende, en l'état de fonctionnement de production, verticalement ou sous un petit angle (α) par rapport à la direction verticale (17a) en biais du haut dans le verre fondu (12) et que le verre fondu soit chauffé par le haut et qu'elle soit configurée de façon à pouvoir être entré dans, ou sortie de, l'espace intérieur de la cuve par pivotement.

12. Cuve de fusion de verre selon l'une des revendications précédentes, **caractérisée en ce qu'**elle est pourvue de la pluralité d'électrodes (17, 47, 317, 417) pour chauffer le verre fondu, le nombre nécessaire d'électrodes chauffant le verre fondu en l'état de fonctionnement de production et leur alimentation en énergie étant déterminé sur la base de l'énergie de fonte et de purification nécessaire pour le débit de verre prédéterminé et la qualité de verre exigée.

13. Cuve de fusion de verre selon l'une des revendications précédentes, **caractérisée en ce que** la partie intérieure de paroi (15) est tenue moyennant un échafaudage intérieur en acier (35) disposé du côté espace froid de la partie intérieure de paroi et que la partie extérieure de paroi (16) est tenue moyennant un échafaudage extérieur en acier (36) disposé du côté espace froid de la partie extérieure de paroi.

14. Système de deux cuves de fusion de verre (110, 210) selon l'une des revendications précédentes, la première cuve de fusion de verre (110) et la deuxième cuve de fusion de verre (210) étant agencés l'une à côté de l'autre de façon qu'elles forment un espace libre commun (119), la première cuve de fusion de verre et la deuxième cuve de fusion de verre étant configurées de façon que, dans celles-ci, des verres fondus puissent être produits qui ont des compositions différentes.

15. Installation de fusion de verre avec au moins une cuve de fusion de verre (10, 10a, 10b, 10c, 110, 210, 310, 410) selon l'une des revendications 1 à 13 ou avec un système selon la revendication 14, l'installation de fusion de verre comprenant en outre un système d'amenée de mélange de matière brute et/ou de débris de verre et un dispositif d'alimentation en énergie pour la pluralité d'électrodes, le dispositif d'alimentation en énergie étant relié à chaque électrode.

16. Procédé de fabrication d'une cuve de fusion de verre (10, 10a, 10b, 10c, 110, 210, 310, 410) selon l'une des revendications 1 à 13 avec les étapes suivantes :
• mettre à disposition des éléments de palissade pour la paroi latérale de la cuve de fusion de verre,
• disposer et fixer les éléments de palissade sur ou à un fond de la cuve de fusion de verre de façon telle que la paroi latérale forme une partie intérieure de paroi (15, 115, 215, 315, 415) et une partie extérieure de paroi (16, 116, 216, 316, 416) disposée en face de la partie intérieure de paroi, que le côté espace chaud (15b, 115b, 215b, 315b) de la partie intérieure de paroi de la paroi, orienté vers l'espace intérieur de cuve (11, 111, 211, 311, 411) et le côté espace chaud (16b, 116b, 216b, 316b) de la partie extérieure de paroi de la paroi, orienté vers l'espace intérieur de cuve (11, 111, 211, 311, 411) ayant essentiellement la forme de surfaces enveloppantes intérieures et extérieures d'un corps creux avec un espace creux continu ou d'un segment de corps creux, le corps creux étant par exemple un cylindre creux ou un prisme creux, et que la partie intérieure de paroi (15, 115, 215) entoure et enferme vers l'intérieur, un espace libre continu (19, 119, 319, 419) correspondant à l'espace creux et s'étendant en direction verticale, par rapport au pourtour de celui-ci, au moins partiellement de façon qu'aucun verre fondu n'arrive dans l'espace libre.
